(19) Europäisches Patentamt
European Patent Office
Office européen des brevets

(11) **EP 2 597 075 B1**

(12) **EUROPÄISCHE PATENTSCHRIFT**

(45) Veröffentlichungstag und Bekanntmachung des Hinweises auf die Patenterteilung:
**27.01.2016 Patentblatt 2016/04**

(51) Int Cl.:
**C04B 35/565** (2006.01)     **C04B 35/573** (2006.01)
**C04B 38/00** (2006.01)

(21) Anmeldenummer: **11190377.9**

(22) Anmeldetag: **23.11.2011**

(54) **PORÖSER ALPHA-SIC-HALTIGER FORMKÖRPER MIT DURCHGEHEND OFFENER PORENSTRUKTUR**

POROUS MOULDING CONTAINING ALPHA SIC WITH COMPLETELY OPEN PORE STRUCTURE

CORPS DE FORMAGE COMPRENANT DE L'ALPHA SIC POREUX AYANT UNE STRUCTURE DE PORES OUVERTE TRAVERSANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.05.2013 Patentblatt 2013/22**

(73) Patentinhaber: **Stiholt, Leif**
**9252 Dybvad (DK)**

(72) Erfinder:
• **Wolff, Thomas**
**95213 Münchberg (DE)**

• **Friedrich, Holger, Dr.**
**01477 Fischbach (DE)**

(74) Vertreter: **Walcher, Armin**
**Louis, Pöhlau, Lohrentz**
**Patentanwälte**
**Postfach 30 55**
**90014 Nürnberg (DE)**

(56) Entgegenhaltungen:
**US-A- 4 777 152          US-A- 4 981 665**
**US-A1- 2002 011 683      US-A1- 2009 093 358**
**US-B2- 7 648 932         US-B2- 7 867 313**

EP 2 597 075 B1

**Beschreibung**

Die vorliegende Erfindung betrifft einen Filter umfassend einen porösen alpha-SiC-haltigen Formkörper mit gasdurchlässiger, offenenporiger Mikrostruktur sowie ein Verfahren zur Herstellung desselben.

Filter werden beispielsweise eingesetzt, um den Anteil an Ruß im Abgas eines Dieselmotors zu reduzieren. Weiterhin können Filter mit Katalysator beschichtet werden, um sowohl die Verbrennung des Ruß zu unterstützen als auch um Restkohlenwasserstoffe sowie Kohlenmonoxid zu oxidieren. Weiterhin besteht durch entsprechende Katalystoren die Möglichkeit, die Emission von Stickoxiden zu reduzieren.

Filter für die Abgasnachbehandlung können in offene und geschlossene Systeme unterteilt werden. Die Filtrationsleistung von geschlossenen Systemen ist in der Regel deutlich höher und erreicht bis zu 99,9%.

Geschlossene Systeme werden auch als Wandstromfilter bezeichnet. Das Abgas wird durch die porösen Wände des Filtermaterials - auch als Substrat bezeichnet-geführt und dadurch von Russpartikeln gereinigt. Dies wird dadurch erreicht, dass bei wabenartigen Strukturen wechselseitig die Kanäle verschlossen sind. Durch die Reibungsverluste beim Durchströmen der Kanäle und insbesondere der Kanalwände wird ein Gegendruck erzeugt. Dadurch wird die Leistung des Motors verringert.

Der Gegendruck hängt von der Geometrie des Filters und der Kanäle, der offenen Anströmfläche, der Permeabilität der Wände sowie der Dicke der Wände ab. Auch der Aufbau einer Rußschicht und/oder Ascheeinlagerungen auf und/oder in der Filterwand erhöhen den Gegendruck.

Die Permeabilität der Kanalwände wird von der Mikrostruktur des Substratmaterials, insbesondere der Porengrößenverteilung sowie der Anordnung der Poren und der Porosität bestimmt.

Für Wandstromfilter werden vorwiegend keramische Materialien verwendet. Dies sind insbesondere Siliziumcarbid (SiC), Cordierit oder Aluminiumtitanat bzw. Mullit. Die Keramiken weisen Unterschiede hinsichtlich thermischer und chemischer Stabilität, thermischer Ausdehnung und Herstellungskosten auf.

Materialien mit geringerem thermischen Ausdehnungskoeffizient wie Cordierit oder Aluminiumtitanat weisen meist auch eine geringere thermische Leitfähigkeit auf, was zu hohen thermischen Gradienten während der Regeneration führen kann. Das Aluminiumtitanat weist zudem eine geringe mechanische Stabilität auf, was die Möglichkeiten zur Erhöhung der Porosität eingrenzt. Im Fall von Cordierit kommt erschwerend hinzu, dass insbesondere Ascheeinlagerungen zu einer Reduzierung der thermischen Stabilität führen.

Mullit weist einen sehr hohen thermischen Ausdehnungskoeffizient bei gleichzeitig niedrieger thermischer Leitfähigkeit auf, was bei Temperaturgradienten, wie sie bei einem Abbrand von Ruß auftreten können, leicht zu überkritischen Spannungen und somit Rissbildung führen kann.

SiC besitzt hinsichtlich mechanischer, thermischer und chemischer Stabilität die besten Eigenschaften für eine Verwendung als Wandstromfilter. Auf Grund der größeren thermischen Ausdehnung können technisch relevante Filter aus SiC mit Größen größer 150 mm jedoch nicht als Monolithe verwendet werden. Vorzugsweise werden die Filter aus kleineren Segmenten zusammengebaut, wobei die einzelnen Segmente mittels eines hochtemperaturstabilen, keramischen Klebers dauerhaft miteinander verbunden werden. Auftretende thermische Spannungen können hierbei durch die Kleberschicht kompensiert werden und führen vorzugsweise nicht zu einem Bauteilversagen.

Zur Herstellung von Substraten auf der Basis von SiC gibt es verschiedene Varianten.

Ein Verfahren zur Herstellung von rekristallisiertem SiC (R-SiC) wird beispielsweise in der EP 0 336 883 B1 beschrieben, bei dem multimodale Partikelverteilungen von SiC verwendet werden. Die Größenverteiluhg der verwendeten Partikel während der Formgebung bestimmt die Porosität, die weiterhin durch Verwendung von Porenbildnern erhöht werden kann. Bei Temperaturen oberhalb von 2000°C sublimiert und rekondensiert die feine Partikelfraktion und verbindet die gröberen Partikel wodurch eine stabile Struktur entsteht. Die Porosität verringert sich nur geringfügig während des Temperaturschrittes.

Ein Verfahren zur Herstellung von Silizium gebundenem SiC (SiSiC) wird beispielsweise in der EP 1 277 714 A1 beschrieben, bei dem SiC Körner durch feine Siliziumtropfen fest miteinander verbunden werden. Die Größenverteilung der verwendeten Partikel während der Formgebung bestimmt ebenfalls die Porosität, die weiterhin durch Verwendung von Porenbildner erhöht werden kann. Die Porosität verringert sich nur geringfügig während des Temperaturschrittes.

Ein Verfahren zur Herstellung von flüssigphasengesintertem SiC, bei dem durch Zusatz von Additiven eine Flüssigphase gebildet wird, welche die SiC-Partikel miteinander verbindet, wird beispielsweise in DE 197 27 115 C2 beschrieben.

Ein Verfahren zur Herstellung von keramisch gebundenem SiC wird beispielsweise in der EP 1 070 687 A1 beschrieben, bei dem die SiC-Partikel mit Hilfe einer oxidkeramischen Masse miteinander verbunden werden:

Sowohl bei der Herstellung von keramisch gebundenem SiC als auch bei der Herstellung von flüssigphasengesintertem SiC bestimmt die Größenverteilung der verwendeten Partikel während der Formgebung die Porosität, die durch Verwendung von Porenbildner erhöht werden kann. Der Anteil an keramischer Bindephase beeinflusst ebenfalls die Porosität, die sich nur geringfügig während des Sinterschrittes verringert.

Ein Verfahren zur Herstellung von reaktionsgebundenem SiC wird beispielsweise in den Dokumenten EP 0 796 830 A1, EP 1 741 687 A1, US 7,648,932 B2 und US 7,867,313 B2 beschrieben, wobei Silizium und Kohlenstoff bei einer Temperatur vorzugsweise oberhalb des Schmelzpunktes von Silizium zu SiC umgewandelt wird. Die Zunahme der Dichte bei der Bildung des Reaktionsproduktes erhöht gleichzeitig die Porosität. Durch Zusatz von Schmelzpunkt erniedrigenden Legierungselementen kann die Umwandlung von Silizium und Kohlenstoff in SiC bei reduzierten Temperaturen, unterhalb des Schmelzpunktes von Silizium erfolgen.

Ein Nachteil der bekannten SiC-Substrate ist, dass sie meist nur eine Porosität von maximal 50 - 52 Vol.-%, bezogen auf das Gesamtvolumen des Substrates, aufweisen. Dies gilt insbesondere für rekristallisiertes SiC sowie fremdphasengebundenes SiC.

Zur Einstellung einer höheren Porosität wird beispielsweise in der EP 1 588 995 A1 der Einsatz von Porenbildner vorgeschlagen. Mit steigendem Anteil an Porenbildnern sinkt jedoch die mechanische Stabilität und der Filtrationsgrad verringert sich. Auch zeigen sich Probleme bei der Herstellung der Substrate, da beispielsweise die Rekristallisationsprozesse bei R-SiC erschwert werden. Weiterhin bilden sich verstärkt Risse beim Ausbrennen des Porenbildners.

Die Porengröße und damit auch der Gegendruck des Substratmaterials können ebenfalls durch die Auswahl der Primärpartikelgröße sowie die Verwendung unterschiedlicher Partikelfraktionen erreicht werden.

In der EP 0 796 830 A1 wird ein Verfahren beschrieben, bei dem ein Porenwachstum durch Erhitzen oberhalb von 2000°C erreicht wird. Ein gemäß der EP 0 796 830 A1 hergestellter Formkörper weist jedoch mit 1,25 mm ± 0,5 mm eine hohe Wanddicke auf.

Hergestellt werden auch Substrate mit hoher Filtrationsleitung und geringem Gegendruckanstieg unter Rußbeladung, bei denen der Filtrationsgrad über die Applizierung einer Membran mit kleinen Porendurchmessern auf einem Substrat mit eingestellter Porosität eingestellt werden. Diese Vorgehensweise wird beispielsweise in der EP 2 158 956 A1 beschrieben.

So können über die Porosität des Substrates Eigenschaften wie Rußbeladungsgrenze (Soot-Mass-Limit), Katalysatoraufnahmefähigkeit und mechanische Stabilität unabhängig vom Filtrationsgrad eingestellt werden, da dieser durch die Membran eingestellt wird. Da das Verfahren aber die Applizierung einer Membran notwendig macht, ist das Verfahren aufwendig, fehleranfällig und teuer.

In der US 3,097,930 wird ein hoch poröses Substrats durch Imprägnieren eines Polymerschaums durch einen SiC-Schlicker, anschließende Trocknung und doppelte Sinterung bei 1900°C bis 2300°C, bei der das Polymer ausgebrannt wird, erhalten.

Alternativ können keramische Partikel bei der Schaumbildung in den Polymerschaum eingebaut werden, wobei die keramischen Partikel durch Ausbrennen des Schaums und anschließende Keramisierungsreaktionen in eine offenporige Keramik umgewandelt werden, wie beispielsweise in der US 3,833,386, US 3,175,918 oder US 3,345,440 beschrieben wird. Solche Körper weisen eine Skelettstruktur mit einer Porosität von bis zu 90% auf. Dadurch wird zwar eine hohe Gaspermeabilität bewirkt, jedoch bei sehr geringer mechanischer Festigkeit. Außerdem weisen die Poren einen Durchmesser von größer 100 μm auf, wodurch eine schlechtere Filtrationsleistung erhalten wird. Kleine Poren sind dagegen auf Grund des Ausdehnungsverhaltens des Polymers sowie einer homogenen Dispergierung sehr schwierig herzustellen, da kleine Poren dazu tendieren, geschlossen zu sein.

Ein weiteres Verfahren zur Herstellung eines SiC-Filters mit guter Gaspermeabilität und geringer Dichte und somit hoher Porosität wird in der US 4,777,152 beschrieben. Für dieses Verfahren muss jedoch beta-SiC kleiner Teilchengröße als Rohstoff eingesetzt werden. Pulverförmiges beta-SiC ist schwierig herzustellen und daher teuer. Außerdem weist pulverförmiges beta-SiC ebenso wie das alpha-SiC stark abrasive Eigenschaften auf, so dass Formwerkzeuge bei der Herstellung von Waben für die Filter einem starken Verschleiß unterliegen.

Mit reaktionsgeformten SiC, wie nach dem in der EP 1 741 687 A1 beschriebenen Verfahren hergestellt, können mechanisch stabile, hochporöse Substrate, die eine Porosität von > 50Vol.-% aufweisen, mit sehr guter Filtrationsleistung bei niedrigen Temperaturen erhalten werden. Diese weisen jedoch auf Grund der besonderen Mikrostruktur nachteiligerweise einen hohen Druckabfall auf. Für Dieselmotoren ist jedoch ein möglichst geringer Gegendruck notwendig, um die Leistung des Motors so wenig wie möglich zu beeinträchtigen.

Die Porosität und Porengrößenverteilung bei Kornkeramiken mit SiC als Ausgangsmaterial wird durch die Partikelgrößenverteilung des Ausgangsmaterials sowie dem Anteil optionaler Porenbildner und/oder Bindemittel bestimmt. Benachbarte Partikel sind miteinander verbunden und bilden ein typisches Partikel-Netzwerk wobei einzelne Partikel in einer rasterelektronenmikroskopischen (abgekürzt REM) Aufnahme identifiziert werden können.

Reaktionsgeformtes SiC weist dagegen eine kontinuierliche dreidimensionale Gerüststruktur auf, die nicht über eine Bindemittelphase verbundene diskrete SiC-Partikel enthält. Vielmehr liegt ein kontinuierliches Gerüst aus SiC vor. Das kontinuierliche SiC-Gerüst weist teilweise kristallin aussehende Bereiche und teilweise amorph aussehend Bereiche, die keine sichtbaren Korngrenzen aufweisen, auf.

Eine Besonderheit des reaktionsgeformten SiC ist somit seine Mikrostruktur, die sich deutlich von der einer Kornkeramik unterscheidet.

Ein weiteres Charakteristikum von reaktionsgeformtem SiC ist, dass es bei Herstellungstemperaturen unterhalb von 1800°C hergestellt werden kann, und dann vorwiegend als beta-SiC vorliegt. Da bei der Herstellung von reaktionsgeformtem SiC als Ausgangsmaterial kein SiC verwendet wird, reduziert sich ebenfalls der Verschleiß der bei der Herstellung verwendeten Formwerkzeuge deutlich. Außerdem sind im Vergleich zu rekristallisiertem SiC die Temperaturen bei der Hochtemperaturbehandlung stark reduziert, was die Herstellungskosten weiter deutlich reduziert.

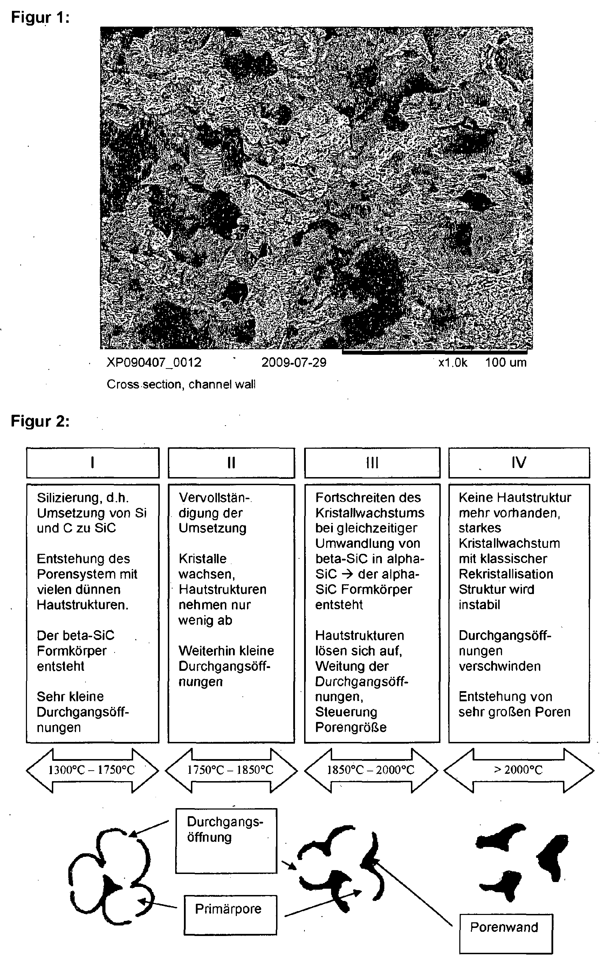

Die Mikrostruktur von reaktionsgeformtem SiC, die beispielhaft in Figur 1 dargestellt ist, zeichnet sich durch große Primärporen aus, die durch kleine Öffnungen in den Porenwänden miteinander verbunden sind. Diese kleinen Öffnungen in den Porenwänden, die auch als Durchgangsöffnungen bezeichnet werden können, führen zu einer durchgängigen offenen Porosität des SiC-Gerüstes und bestimmen maßgeblich Abscheidegrad und Permeabilität der Struktur. So können auch ohne Aufbau einer Rußschicht und/oder Ascheeinlagerungen auf und/oder in der Filterwand hohe Abscheidegrade erreicht werden. Aufgrund dieser Struktur erhält man aber auch einen deutlich höheren Gegendruck bei der Verwendung als Wandstromfilter im Vergleich zu den hergestellten Komkeramiken, beispielsweise rekristallisiertes SiC oder fremdphasengebundenes SiC.

Die Porenwände der Primärporen können dünne Häutchen oder Membrane sein, die den amorph aussehenden Bereichen zuzuordnen sind.

Durch den Einsatz größerer Ausgangspartikel sowie den Einsatz von Porenbildnern kann die Porosität der Struktur und der Durchmesser der Primärporen gezielt erhöht werden. Da dadurch jedoch die Durchgangsöffnungen durch die Häutchen, welche die Primärporen gegeneinander abgrenzenden, kaum beeinflusst werden, ist der Effekt auf den Gegendruck gering. Der Verwendung gröberer Ausgangspulver sind außerdem aufgrund des Herstellungsprozesses sowie der Wandstärke der Filterkanäle Grenzen gesetzt. Zudem sinkt mit steigender Porosität unabhängig von der Verwendung die mechanische Stabilität eines Formkörpers.

Die US 4,756,895 offenbart ein Verfahren zur Herstellung eines Siliciumcarbidprodukts, bei dem eine Silicium- und Kohlenstoff-haltige Vorläuferzusammensetzung auf eine Temperatur von 2100 bis 2500° C erhitzt wird.

Aufgabe der vorliegenden Erfindung ist es daher, einen Filter umfassend einen porösen SiC-haltigen Formkörper mit einer hohen Porosität und einer gleichzeitig guten mechanischen Stabilität bereitzustellen, der eine definierbare Porenstruktur aufweist.

Aufgabe der vorliegenden Erfindung ist es weiterhin, ein Filterbauteil bereitzustellen, das sich bei hoher offener Porosität durch einen geringen Gegendruck und einen hohen Abscheidegrad auszeichnet.

Die Aufgabe der vorliegenden Erfindung wird gelöst durch Bereitstellung eines Filters umfassend einen porösen, alpha-SiC-haltigen Formkörper mit gasdurchlässiger, offenporiger Mikrostruktur umfassend plättchenförmige Kristallite, die zu einer dreidimensionalen zusammenhängenden, durchgehenden Skelettstruktur verbunden sind, wobei die Skelettstruktur zu mehr als 80 Gew.-%, vorzugsweise zu mehr als 90 Gew.-%, vorzugsweise zu mehr als 95 Gew.-%, bezogen auf das Gesamtgewicht an SiC, aus alpha-SiC besteht, wobei der Formkörper als Wabenfilterelement ausgebildet ist, bei dem die Ein- und Ausströmöffnungen der Durchströmkanäle wechselseitig verschlossen sind.

Weiter bevorzugte Ausführungsformen des erfindungsgemäßen Filters sind in den abhängigen Ansprüchen 2 bis 11 beschrieben.

Die Aufgabe der vorliegenden Erfindung wird weiterhin gelöst durch die Bereitstellung eines Verfahrens zum Herstellen eines einen porösen, alpha-SiC-haltigen Formkörper umfassenden Filters nach einem der Ansprüche 1 bis 11, wobei das Verfahren folgende Schritte umfasst,

a) Bereitstellen eines, vorzugsweise reaktionsgeformten, porösen beta-SiC-haltigen Formkörpers, und

b) Erhitzen des, vorzugsweise reaktionsgeformten, porösen beta-SiC-haltigen Formkörpers auf eine Temperatur aus einem Bereich von 1800°C bis 2050°C, vorzugsweise von 1850°C bis 2050°C, weiter bevorzugt von 1900°C bis 1999°C, unter Erhalt des porösen alpha-SiC-haltigen Formkörpers.

Bevorzugte Ausführungsformen des erfindungsgemäßen Verfahrens sind in den abhängigen Ansprüchen 13 bis 19 beschrieben.

Eine bevorzugte Ausführungsform des erfindungsgemäßen Filters ist im abhängigen Anspruch 20 beschrieben.

Die Erfinder haben überraschend festgestellt, dass durch eine Temperaturbehandlung eines in Schritt a) des erfindungsgemäßen Verfahrens bereitgestellten, vorzugsweise reaktionsgeformten, porösen beta-SiC-haltigen Formkörpers bei Temperaturen aus einem Bereich von 1800°C bis 1999°C mit einer Haltezeit von wenigen Stunden, und in einem Bereich von 2000°C bis 2500°C mit einer Haltezeit von unter einer Stunde bis hin zu wenigen Minuten der mittlere Durchmesser der Porendurchgangsöffnungen gezielt vergrößert und somit der Gegendruckaufbau bei Verwendung als Wandstromfilter signifikant und gezielt reduziert werden kann.

Geeignete Verfahren zur Herstellung des in Schritt a) des erfindungsgemäßen Verfahrens bereitgestellten, vorzugsweise reaktionsgeformten, porösen beta-SiC-haltigen Formkörpers werden beispielsweise in den Dokumenten EP 1 741 685 A1, US 7,648,932 B2 und US 7,867,313 B2 beschrieben, deren Inhalt hiermit unter Bezug aufgenommen wird.

Der in Schritt a) des erfindungsgemäßen Verfahrens bereitgestellte poröse beta-SiC-haltige Formkörper ist vorzugsweise ein reaktionsgeformter poröser beta-SiC-haltiger Formkörper, der durch Reaktionsformung bei 1300°C bis 1750°C hergestellt wurde.

Bei einer bevorzugten Ausführungsform wird der in Schritt a) bereitgestellte, vorzugsweise reaktionsgeformte, poröse beta-SiC-haltige Formkörper durch Extrusion einer Silizium- und Kohlenstoff-haltigen Masse oder Infiltration einer Kohlenstoff-haltigen Masse mit einer Silizium-haltigen Schmelze erhalten.

Bei einer weiteren bevorzugten Ausführungsform wird der in Schritt a) bereitgestellte, vorzugsweise reaktionsgeformte, poröse beta-SiC-haltige Formkörper durch ein Verfahren erhalten, das folgende Schritte umfasst:

a1) Formen eines Grünkörpers aus einer Mischung mit oder aus Kohlenstoff-haltigen Partikeln und Silizium-haltigen Partikeln, die jeweils vorzugsweise kein SiC umfassen, und wenigstens einem, vorzugsweise cabonisierbarem, Bindemittel sowie, optional, wenigstens einem weiteren Hilfsstoff,
a2) Trocknen des geformten Grünkörpers,
a3) Entbindern des trockenen Grünkörpers unter Sauerstoffausschluss, vorzugsweise unter Schutzgas, und
a4) Erhitzen des entbinderten Grünkörpers unter Sauerstoffausschluss, vorzugsweise unter Schutzgas, auf eine Temperatur aus einem Bereich von 1300°C bis 1750°C für eine Zeitdauer von mindestens 1/2 Stunde, unter Erhalt des porösen beta-SiC-haltigen Formkörpers.

Unter dem Begriff "Silizium-haltig" im Sinne der Erfindung werden Stoffe verstanden, die elementares Silizium oder Siliziumverbindungen umfassen, jedoch vorzugsweise kein Siliziumcarbid enthalten.

Als elementares Silizium kann jede Si-Modifikation, beispielsweise $\alpha$, $\beta$, $\delta$ oder $\gamma$-Silizium verwendet werden. Es können organische und/oder anorganische Siliziumverbindungen verwendet werden. Als organische Siliziumverbindungen werden vorzugsweise Polymere verwendet, die Si in ihren Grundstruktureinheiten enthalten, wie beispielsweise Siloxane, Silsesquioxane, Polysilane, Polysiloxane oder Siliziumsole, wie beispielsweise Tetraethoxysilan (TEOS). Als anorganische Siliziumverbindungen werden vorzugsweise Silizide, beispielsweise $TiS_2$, $CrSi_2$, $FeSi$ und/oder $FeSi_2$ verwendet.

Vorzugsweise werden metallisches Siliziumpulver oder metallische Legierungen in Pulverform, die Silizium enthalten, verwendet.

Unter dem Begriff "Kohlenstoff-haltig" im Sinne der Erfindung werden vorzugsweise Stoffe verstanden, die Kohlenstoff in der Graphitmodifikation enthalten oder daraus bestehen, jedoch vorzugsweise kein Siliziumcarbid enthalten.

Vorzugsweise werden Kohlenstoffe verwendet, die eine sehr hohe Reinheit aufweisen. Damit ist vorzugsweise ein Kohlenstoffgehalt von mindestens 90 Gew.-%, bevorzugt von mindestens 95 Gew.-%, jeweils bezogen auf das Gesamtgewicht des verwendeten Kohlenstoffs, gemeint.

Vorzugsweise werden die Kohlenstoff-haltigen Partikel, welche nachstehend auch als pulverförmige Kohlenstoffe bezeichnet werden, aus der Gruppe, bestehend aus Ruß, Graphit, carbonisierten Harzen, carbonisierten Stärken und Mischungen davon, ausgewählt. Bevorzugt wird Graphit verwendet. Besonders bevorzugt erfolgt die Umsetzung von Silizium und/oder dem Silizium-haltigen Material mit Graphit, der über eine carbonisierte Stärke gebunden ist.

Geeignete Hilfsstoffe sind beispielsweise Tenside, Wachse, Plastifizierer und/oder Lösungsmittel. Diese Hilfsstoffe können beispielsweise als Extrusionshilfsmittel dienen und bewirken eine verbesserte Gleitfähigkeit der Partikel zueinander und führen zu einer homogenen Verteilung sämtlicher Bestandteile während der Extrusion.

Als Hilfsstoffe zur Porositätserhöhung können Porenbildner wie pulverförmige Polymere, Stärkepulver oder Zellulose eingesetzt werden

Bei einer weiteren bevorzugten Ausführungsform wird der in Schritt a) bereitgestellte, vorzugsweise reaktionsgeformte, poröse beta-SiC-haltige Formkörper ohne Verwendung eines Porenbildners erhalten.

Als Bindemittel, vorzugsweise cabonisierbares Bindemittel, wird vorzugsweise wenigstens eine carbonisierbare Stärke, vorzugsweise carbonisierbare modifizierte Stärke, verwendet. Die Stärke wirkt zum einen für die Kohlenstoff-haltigen Partikel als Binder, zum anderen setzt sie sich, da sie durch die Pyrolyse in einen sogenannten Glaskohlenstoff umgewandelt wird, ebenfalls mit freiem Silizium zu SiC um. Die Verwendung wenigstens einer carbonisierbaren Stärke, vorzugsweise carbonisierbaren modifizierten Stärke, ist somit vorteilhaft für die Stabilität nach der Entbinderung und für die Stabilität im porösen Formkörper.

Vorzugsweise wird eine modifizierte Stärke verwendet, die ab ca. 150 °C solange Wasser aus ihrem Grundmolekül abspaltet, bis nur noch Kohlenstoff zurückbleibt. Nach einer Pyrolyse bei einer Temperatur bis 950°C unter Sauerstoffausschluss, bevorzugt unter Schutzgasatmosphäre, beträgt die Kohlenstoffausbeute vorzugsweise ca. 20 Gew.-%, bezogen auf die eingesetzte Stärkemenge. Beispielsweise wird die wenigstens eine carbonisierbare modifizierte Stärke aus der Gruppe, die aus oxidierte Stärke, acetylierte Stärke, acetylierte oxidierte Stärke, enzymatisch modifizierte Stärke und Mischungen davon besteht, ausgewählt.

Unter "Entbindern" oder auch Pyrolyse wird die pyrolytische Zersetzung der Bindemittel und anderer Hilfsstoffe unter Sauerstoffausschluss verstanden, welche auch als Verkokungsprozess oder Carbonisierungsprozess bezeichnet werden kann.

Ohne das wenigstens eine carbonisierbare Bindemittel, vorzugsweise carbonisierbare Stärke, weiter bevorzugt carbonisierbare modifizierte Stärke, liegen die Silizium- und Kohlenstoff-haltigen Partikel nur in einem sehr schwach gebundenen Gerüst in dem Formkörper vor.

Durch die Verwendung von wenigstens einem carbonisierbarem Bindemittel, vorzugsweise wenigstens einer carbonisierbaren, vorzugsweise modifizierten, Stärke, sind die Kohlenstoff-haltigen Partikel und die Siliziumpartikel nach dem Entbindern über das wenigstens eine carbonisierte Bindemittel, vorzugsweise carbonisierte Stärke, in einem stabilen Formkörper gebunden. Die Bindung der Kohlenstoff-haltigen Partikel über das wenigstens eine carbonisierte Bindemittel, vorzugsweise die wenigstens eine carbonisierte Stärke, führt weiterhin zu einer Verbesserung der Stabilität der durch den Silizierprozess entstehenden SiC-Struktur.

Das Entbindern des trockenen Grünkörpers erfolgt unter Sauerstoffausschluss, vorzugsweise unter Schutzgas, bevorzugt Stickstoff.

Vorzugsweise ist der Schritt a4) ein Silizierungsschritt. Unter dem Begriff "Silizieren" im Sinne der Erfindung wird die Umsetzung von Silizium- und Kohlenstoff-haltigen Material zu SiC verstanden.

Bei einer bevorzugten Ausführungsform kann der Mischung in Schritt a1) auch wenigstens ein, vorzugsweise pulverförmiges, Element aus der 3. Hauptgruppe des Periodensystems der Elemente zugegeben werden. Vorzugsweise handelt es sich bei diesem wenigstens einen Element um Bor oder Aluminium oder einer Mischung davon, besonders bevorzugt um Aluminium. Vorzugsweise senkt das wenigstens eine, vorzugsweise pulverförmige, Element aus der 3. Hauptgruppe des Periodensystems der Elemente in Kombination mit dem Silizium den Schmelzpunkt des Siliziums herab und verbessert zudem die Benetzungseigenschaften des geschmolzenen Siliziums auf dem Kohlenstoffgerüst. Dadurch wird vorzugsweise eine verbesserte Umsetzung des Kohlenstoffgerüstes mit dem Silizium zu SiC schon bei Temperaturen von 1300°C bis zum Schmelzpunkt des Siliziums (1414°C) erreicht.

Schritt a4) erfolgt bevorzugt bei Temperaturen oberhalb des Schmelzpunktes von Silizium bzw. oberhalb des Schmelzpunktes der Legierung aus Silizium und wenigstens einem Element der 3. Hauptgruppe des Periodensystems der Elemente, vorzugsweise bei einer Temperatur zwischen 1300°C und 1750°C, weiter bevorzugt zwischen 1420°C und 1700°C. Die Endtemperatur wird vorzugsweise zwischen 1 und 4 Stunden gehalten. Das aufgeschmolzene Silizium wird hierbei in das poröse Kohlegerüst gesaugt und hinterlässt Hohlräume, die die späteren Poren bilden.

Vorzugsweise bei Zugabe von Bor oder Aluminium oder einer Mischung davon, weiter bevorzugt bei Zugabe von Aluminium, kommt es zur Ausbildung von großen Hohlräumen, sogenannten Primärporen, die durch kleinere Öffnungen untereinander zu einer durchgehend offenen Porenstruktur verbunden sind. Bei der Silizierung in Schritt a4) handelt es sich somit nicht um eine klassischen Sintervorgang, sondern um eine chemische Umwandlung in eine neue Verbindung. Die Silizierung in Schritt a4) wird unter Sauerstoffausschluss durchgeführt. Bevorzugt wird der Schritt a4) unter Vakuum oder Argonatmosphäre durchgeführt.

Es ist grundsätzlich auch möglich, den reaktionsgeformten, porösen beta-SiC-haltigen Formkörper auch über folgende Verfahrensschritte herzustellen:

  a1') Formen eines Grünkörpers aus einer Mischung mit oder aus Kohlenstoff-haltigen Partikeln, die vorzugsweise kein SiC umfassen, und wenigstens einem Bindemittel sowie, optional, wenigstens einem weiteren Hilfsstoff,
  a2') Trocknen des geformten Grünkörpers,
  a3') Entbindern des trockenen Grünkörpers unter Sauerstoffausschluss, vorzugsweise unter Schutzgas, und
  a4') Infiltrieren des entbinderten Grünkörpers bei einer Temperatur aus einem Bereich von 1300°C bis 1750°C mit einer Silizium-haltigen Schmelze, vorzugsweise Siliziumschmelze.

Bei einer bevorzugten Ausführungsform kann die in Schritt a4') verwendete Siliziumhaltigen Schmelze, vorzugsweise Siliziumschmelze, weiterhin mindestens ein Element aus der 3. Hauptgruppe des Periodensystems der Elemente, vorzugsweise Bor oder Aluminium oder Mischungen davon, weiter bevorzugt Aluminium, enthalten.

Weiter bevorzugt ist die in Schritt a4') verwendete Silizium-haltigen Schmelze eine Schmelze, die aus Silizium und weiterhin mindestens ein Element aus der 3. Hauptgruppe des Periodensystems der Elemente, vorzugsweise Bor oder Aluminium oder Mischungen davon, weiter bevorzugt Aluminium, besteht.

Diese Variante ist jedoch für eine großtechnische Produktion sehr aufwendig und soll deswegen hier nur exemplarisch aufgeführt werden.

Bei einer Ausführungsform weist der in Schritt a) bereitgestellte, vorzugsweise reaktionsgeformte, poröse beta-SiC-haltigen Formkörper eine Kanäle-haltige Struktur auf, die aus einer Vielzahl von Kanälen besteht. Vorzugsweise weist die Kanäle-haltige Struktur des, vorzugsweise reaktionsgeformten, porösen beta-SiC-haltigen Formkörpers sich entlang der Längsachse des Formkörpers erstreckende Kanäle auf, die im Wesentlichen parallel zueinander angeordnet sind.

Der Querschnitt der Kanäle wird im Allgemeinen auch als Zelle bezeichnet.

Vorzugsweise weisen die Kanäle des in Schritt a) bereitgestellten, vorzugsweise reaktionsgeformten, porösen beta-SiC-haltigen Formkörpers einen quadratischen oder polygonalen Querschnitt, beispielsweise hexagonalen oder octogonalen Querschnitt, auf. Vorzugsweise weist die Kanäle-haltige Struktur des in Schritt a) bereitgestellten, vorzugsweise reaktionsgeformten, porösen beta-SiC-haltigen Formkörpers eine Kanaldichte auf, die in cpsi beschrieben werden kann, wobei cpsi das englischsprachige cells per square inch abkürzt, welches als Kanäle bzw. Zellen pro Quadrat-Inch übersetzt werden kann, und die Anzahl von Kanäle bzw. Zellen beschreibt, die in einer Querschittsfläche von einem Inch mal einem Inch liegen. Der Wert der Kanaldichte des in Schritt a) bereitgestellten, vorzugsweise reaktionsgeformten, porösen beta-SiC-haltigen Formkörpers beträgt vorzugsweise 50 bis 600 cpsi, weiter bevorzugt von 100 bis 560 cpsi, weiter bevorzugt von 180 bis 500 cpsi, besonders bevorzugt von 200 bis 420 cpsi.

Die Kanalwandstärken sollten bei dem in Schritt a) bereitgestellten, vorzugsweise reaktionsgeformten, porösen beta-SiC-haltigen Formkörper so dünn wie möglich sein.

Bei einer bevorzugten Ausführungsform weisen die Kanalwände des in Schritt a) bereitgestellten, vorzugsweise reaktionsgeformten, porösen beta-SiC-haltigen Formkörper eine Wandstärke in dem Bereich von 100 $\mu$m bis 580 $\mu$m, vorzugsweise 120 bis 500 $\mu$m, vorzugsweise 150 bis 420 $\mu$m, bevorzugt 180 bis 400 $\mu$m, vorzugsweise 200 bis 380, noch weiter bevorzugt 220 bis 350 $\mu$m, auf.

Bei einer Ausführungsform weist der in Schritt b) erhaltene poröse alpha-SiC-haltige Formkörper eine Kanäle-haltige Struktur auf, die aus einer Vielzahl von Kanälen besteht. Vorzugsweise weist die Kanäle-haltige Struktur des,porösen alpha-SiC-haltigen Formkörpers sich entlang der Längsachse des Formkörpers erstreckende Kanäle auf, die im Wesentlichen parallel zueinander angeordnet sind.

Vorzugsweise weisen die Kanäle des in Schritt b) erhaltenen porösen alpha-SiC-haltigen Formkörpers einen quadratischen oder polygonalen Querschnitt, beispielsweise hexagonalen oder octogonalen Querschnitt, auf. Vorzugsweise weist die Kanäle-haltige Struktur des in Schritt b) erhaltenen, porösen alpha-SiC-haltigen Formkörpers ebenfalls eine Kanaldichte von 50 bis 600 cpsi, weiter bevorzugt von 100 bis 560 cpsi, weiter bevorzugt von 180 bis 500 cpsi, besonders bevorzugt von 200 bis 420 cpsi auf.

Bei einer bevorzugten Ausführungsform weisen die Kanalwände des in Schritt b) erhaltenen porösen alpa-SiC-haltigen Formkörpers eine Wandstärke in dem Bereich von 100 $\mu$m bis 580 $\mu$m, vorzugsweise 120 bis 500 $\mu$m, vorzugsweise 150 bis 420 $\mu$m, bevorzugt 180 bis 400 $\mu$m, vorzugsweise 200 bis 380, noch weiter bevorzugt 220 bis 350 $\mu$m, auf.

Bei feinzelligen Wabenstrukturen, wie sie in der Abgasnachbehandlung von Dieselmotoren eingesetzt werden, spielt die zur jeweiligen Zelldichte gehörende Kanalwandstärke eine entscheidende Rolle, wenn es um den Gegendruck des Filters geht.

Zur Verdeutlichung kann man sich den Gegendruck in einem Durchströmtest für zwei Filter, die jeweils aus 9 Einzelsegmenten aufgebaut sind, beide eine Zelldichte von 300 cpsi, wobei jeweils die Ein- und Ausströmöffnungen der Durchströmkanäle wechselseitig verschlossen sind, und die Abmaße 5,66 Zoll im Durchmesser und 10 Zoll Länge aufweisen und aus dem gleichen Substrat hergestellt wurden, ansehen. Filter A hat eine Kanalwandstärke von 330 $\mu$m, Filter B eine von 300 $\mu$m. Die Porosität des Substrates betrug bei beiden Filtern 56 Vol.-%, bezogen auf das äußere Volumen des Substrates wobei das Volumen offener Kanäle nicht mitgerechnet wurde, bei einer mittleren Porengröße von 22 $\mu$m. Das Ergebnis ist sehr deutlich: Bei einem Volumenstrom von 600 m$^3$/Stunde weist Filter A mit 330 $\mu$m Wandstärke einen Gegendruck von 63 mbar auf. Filter B mit einer Wandstärke von 300 $\mu$m liegt bei dem gleichen Volumenstrom bei 50 mbar. Diese Messungen wurden bei Raumtemperatur mit dem Filterprüfstand SF-1020 von SuperFlow durchgeführt.

Dieses Ergebnis veranschaulicht, dass für eine gegebene Zelldichte die zugehörige Kanalwandstärke nicht zu groß sein darf. Die Erfahrung hat gezeigt, dass man bei 200 cpsi maximal auf 450 $\mu$m in der Kanalwandstärke gehen sollte und bei 300 cpsi maximal auf 350 $\mu$m. Für grobzellige Strukturen liegen die Obergrenzen für die Kanalwandstärken bei 600 $\mu$m im Falle von 150 cpsi und bei 800 $\mu$m im Falle von 90 cpsi.

In Schritt b) des erfindungsgemäßen Verfahrens wird ein, vorzugsweise reaktionsgeformter, poröser beta-SiC-haltiger Formkörper mit einer Temperatur aus einem Bereich von 1800°C bis unterhalb 2050°C, vorzugsweise von 1850°C bis 2050°C, weiter bevorzugt von 1900°C bis 1999°C, beaufschlagt, wodurch ein poröser alpha-SiC-haltiger Formkörper erhalten wird.

Vorzugsweise wird das beta-SiC des in Schritt a) bereitgestellten, vorzugsweise reaktionsgeformten, porösen beta-SiC-haltigen Formkörpers in Schritt b) zu mindestens 80 Gew.-%, bezogen auf das Gesamtgewicht des in Schritt a) bereitgestellten beta-SiC, in alpha-SiC umgewandelt.

Vorzugsweise kann der Schritt b) des erfindungsgemäßen Verfahrens in-line im Anschluss, d.h. unmittelbar anschließend an einen Silizierschritt, vorzugsweise ohne zwischenzeitliches Abkühlen, bei dem übergangsweise ein reaktionsgeformter beta-SiC-haltige Formkörper bei einer Temperatur aus einem Bereich von 1300°C bis 1750°C hergestellt wird, erfolgen.

Durch die Wahl des Zeit-Temperatur-Profils in Schritt b) des erfindungsgemäßen Verfahrens kann der mittlere Porendurchmesser und somit der Druckabfall eines daraus aufgebauten Filters gezielt eingestellt werden.

Unter dem mittleren Porendurchmesser, welcher auch als mittlere Porengröße bezeichnet werden kann, ist der durchschnittliche Porendurchmesser, der sich aus dem Median der Porengrößenverteilung auf das Porenvolumen bezogen ergibt, zu verstehen. Der Porendurchmesser kann auch als Porengröße bezeichnet werden.

Unter "Porosität" versteht man die Summe der Hohlräume in einem festen, porösen Körper, bezogen auf dessen äußeres Volumen. Die Summe der Hohlräume wird dabei in Vol.-% bezogen auf das äußere Volumen angegeben, welches 100 Vol.-% entspricht. Bei Wabenkörpern ist hierbei das Volumen der offenen Kanäle nicht mitzurechnen.

Unter "offener Porosität" versteht man die Summe der untereinander und/oder mit der Umgebung in Verbindung stehenden Hohlräume in einem festen, porösen Körper, bezogen auf dessen äußeres Volumen.

Unter "gasdurchlässiger, offene Porosität" versteht man die Summe der untereinander und mit der Umgebung in Verbindung stehenden Hohlräume in einem festen, porösen Körper, bezogen auf dessen äußeres Volumen.

Der mittlere Porendurchmesser wird aus der differentiellen Porenverteilung bestimmt. Diese wird zusammen mit der gasdurchlässigen, offenen Porosität mit Hilfe der Quecksilberporosimetrie emittelt.

Die Quecksilberporosimetrie oder Quecksilberintrusion wird vorzugsweise gemäß DIN 66133 durchgeführt. Als Ergebnis einer solchen Messung erhält man eine differentielle Porenverteilung des untersuchten Formkörpers gegeben durch das spezifische Volumen der Pore ($mm^3/g$) in Abhängigkeit von dem Durchmesser der Pore ($\mu$m). Mit dieser Methode können Poren mit einem Durchmesser von größer als 3 nm sowie zwischen den Poren angeordnete Durchgangsöffnungen, die einen Durchmesser von größer als 3 nm aufweisen, vermessen werden.

Vorzugsweise weist der in Schritt a) bereitgestellte, vorzugsweise reaktionsgeformte, poröse beta-SiC-haltige Formkörper Poren mit einem mittels Quecksilberporosimetrie ermittelten mittleren Porendurchmesser aus einem Bereich von 1 $\mu$m bis 25 $\mu$m, vorzugsweise 3 bis 20 $\mu$m, besonders bevorzugt zwischen 5 bis 15 $\mu$m, auf.

Vorzugsweise nimmt der mittels Quecksilberporosimetrie ermittelte, mittlere Porendurchmesser des in Schritt a) bereitgestellten, vorzugsweise reaktionsgeformten, porösen beta-SiC-haltigen Formkörpers in Schritt b) um den Faktor 1,5 bis 10, weiter bevorzugt um den Faktor 2 bis 5 zu.

Vorzugsweise weist der in Schritt b) erhaltene poröse alpha-SiC-haltige Formkörper einen mittleren Porendurchmesser aus einem Bereich von 3 $\mu$m bis 50 $\mu$m, weiter bevorzugt von 4 $\mu$m bis 35 $\mu$m, noch weiter bevorzugt von 10 $\mu$m bis 30 $\mu$m, und eine gasdurchlässige, offene Porosität aus einem Bereich von 45 Vol.% bis 95 Vol.%, vorzugsweise von 50 Vol.% bis 85 Vol.%, vorzugsweise von 54 Vol.% bis 78 Vol.%, jeweils bezogen auf das Gesamtvolumen des SiC-Formkörpers, auf.

Die Ausgangsporengröße kann vorzugsweise über die Kornverteilungen der Ausgangsmaterialien, beispielsweise der verwendeten Kohlenstoff-haltigen Partikel und Silizium-haltigen Partikel und der verwendeten Partikel des wenigstens einen Elements aus der 3. Hauptgruppe des Periodensystems der Elemente, vorzugsweise Bor, Aluminium, weiter bevorzugt Aluminium, eingestellt werden. Schließlich kann dieses wenigstens eine Element aus der 3. Hauptgruppe des Periodensystems der Elemente eingestellt werden, wie beispielsweise in EP 1 741 685 A1, US 7,648,932 B2 und US 7,867,313 B2 beschrieben wird.

Bei einer Ausführungsform weisen die Silizium-haltigen Partikel eine Korngröße aus einem Bereich von 0,001 bis 190 $\mu$m, und/oder die Kohlenstoff-haltigen Partikel weisen eine Korngröße aus einem Bereich von 0,001 bis 150 $\mu$m auf. Bei einer ersten bevorzugten Ausführungsform weisen die Silizium-haltigen Partikel eine Korngröße aus einem Bereich von 40 bis 140 $\mu$m und einen $d_{50}$-Wert von 60 bis 70 $\mu$m, auf und/oder die Kohlenstoff-haltigen Partikel weisen eine Korngröße aus einem Bereich von 0,001 bis 65 $\mu$m und vorzugsweise einen $d_{50}$-Wert von 15 bis 20 $\mu$m auf.

Bei einer zweiten bevorzugten Ausführungsform weisen die Silizium-haltigen Partikel eine Korngröße aus einem Bereich von 0.001 bis 75 $\mu$m und einen $d_{50}$-Wert von 18 bis 25 $\mu$m, auf und/oder die Kohlenstoff-haltigen Partikel weisen eine Korngröße aus einem Bereich von 0,001 bis 40 $\mu$m und vorzugsweise einen $d_{50}$-Wert von 8 bis 15 $\mu$m auf.

Beispielsweise werden für einen in Schritt a) bereitgestellten, vorzugsweise reaktionsgeformten, porösen beta-SiC-haltigen Formkörper mit Poren in einer mittleren Porengröße im Bereich von 8 bis 15 $\mu$m Kohlenstoff-haltige Partikel mit einer Korngröße im Bereich von 15 bis 20 $\mu$m und Silizium-haltige Partikel mit einer Partikelgröße im Bereich von 40 bis 140 $\mu$m und einem $d_{50}$-Wert von 60 bis 70 $\mu$m verwendet.

Die Kenngröße $d_{50}$ als volumetrischer Durchmesser ist die Größe eines Partikels der größer ist als 50 Volumenprozent der in der Probe insgesamt enthaltenen Partikel.

Bei einer Ausführungsform kann die Porosität des in Schritt a) bereitgestellten, vorzugsweise reaktionsgeformten, porösen beta-SiC-haltigen Formkörpers durch Entfernen von nicht zu SiC umgesetztem Silizium erhöht werden.

Vorzugsweise erfolgt das Entfernen des Siliziums durch chemisches Lösen von Silizium unter Einwirkung von Säure und/oder Lauge oder unter Aufheizen des in Schritt a) bereitgestellten, vorzugsweise reaktionsgeformten, porösen beta-SiC-haltigen Formkörpers und Verflüssigen und/oder Verdampfen von Silizium, wobei besonders bevorzugt das Entfernen des verflüssigten und/oder verdampften Siliziums zusätzlich durch Anlegen von Unterdruck unterstützt wird.

Das Herauslösen des noch freien Siliziums kann beispielsweise auch durch Verdampfen des Siliziums bei einer geeigneten Temperatur oberhalb der Dampftemperatur des Siliziums, vorzugsweise bei oberhalb 1400 °C erfolgen. Bei einer Ausführungsform wird das Verdampfen des Siliziums aus dem in Schritt a) bereitgestellten, vorzugsweise reaktionsgeformten, porösen beta-SiC-haltigen Formkörper bei Temperaturen zwischen 1400°C und 1700°C durchgeführt.

Bei einer weiteren Ausführungsform kann die Porosität des in Schritt b) erhaltenen porösen alpha-SiC-haltigen Formkörpers ebenfalls durch Entfernen von nicht zu SiC umgesetztem Silizium erhöht werden.

Erfindungsgemäß weiten sich in Schritt b) des erfindungsgemäßen Verfahrens die Durchgangsöffnungen zwischen den Poren zunehmend auf und man erhält eine offenere Porenstruktur. Als Ursache für die Öffnung der Porendurchgänge kann ein Auflösen dünner Begrenzungshäutchen der Poren angesehen werden, die vorzugsweise mit steigender Temperatur bzw. Haltezeit fortschreitet und die Durchgänge öffnet. Vorzugsweise lösen sich die dünnen Begrenzungshäutchen dabei auf, da sie eine höhere spezifische Oberfläche aufweisen.

Durch die Zunahme des Durchmessers der Durchgangsöffnungen zwischen den Poren entsteht eine offenere Porenstruktur.

Der gesamte Prozess von der Entstehung des beta-SiC Formkörpers über die Umwandlung in den alpha-SiC Formkörper ist in Figur 2 schematisch dargestellt. Der Gesamtprozess ist in vier Phasen aufgeteilt:In Phase I findet die Umsetzung von Silizium und Kohlenstoff zu SiC statt; der beta-SiC Formkörper entsteht. In Phase II wird die Umsetzung vervollständigt. Bei Annäherung an 1850°C setzt die Umwandlung von beta-SiC zu alpha-SiC ein. Phase III: In dieser Phase findet die Umwandlung von beta- zu alpha-SiC vollständig statt und die Porendurchgangsöffnungen weiten sich auf. In dieser Phase können gezielt die Porenöffnungsweiten über die Temperatur und Haltezeit eingestellt werden. Phase IV: Die Umwandlung zu alpha-SiC ist abgeschlossen. Es setzt nun fortschreitendes Kristallwachtum mit klassischer Rekristallisation ein, d.h. kleine Kristallite lösen sich auf und lagern sich an die großen Kristallite an; es entstehen sehr große Porendurchgangsöffnungen.

Vorzugsweise nimmt der mittels Quecksilberporosimetrie gemessene mittlere Porendurchmesser auf Grund der größer werdenden Durchgangsöffnungen zu, während sich die Primärporen selber im Durchmesser kaum verändert, wie schematisch in Figur 2 dargestellt ist. Dadurch wird vorzugsweise der Gegendruck reduziert, wobei jedoch die Filtrationsleistung kaum, vorzugsweise nicht, reduziert wird.

Der sich einstellende mittlere Porendurchmesser, der auch als Porenöffnungsdurchmesser bezeichnet werden kann, wird vorzugsweise mittels Quecksilberporosimetrie bestimmt und folgt vorzugsweise für die in Figur 2 dargestellte Phase III in Abhängigkeit von der maximalen Temperatur in der Haltezeit einem charakteristischen Verlauf, der durch Funktionen wie die Fehlerfunktion erf(x) oder dem Arcustangens arctan(x) beschrieben werden kann.

Legt man beispielsweise den Ofenbesatz sowie den Temperaturverlauf inklusive Aufheizrampen und Haltezeiten fest, so kann man für ein System mit festgelegten Ausgangsmaterialien den gewünschten Porendurchmesser näherungsweise über eine dieser Funktionen berechnen. Als besonders geeignet hat sich der Arcustangens(x) erwiesen, der in der folgenden Gleichung (1) zur Anpassung herangezogen werden kann.

$$D_{Pore}(T) = D_0 + \frac{D_1}{\pi} \cdot \left\{ \frac{\pi}{2} + \tan^{-1}\left(\frac{T - T_0}{T_1}\right) \right\} \qquad (1)$$

$D_0$ stellt dabei den Porendurchmesser bei der Temperatur dar, bei der die Silizierung abgeschlossen ist, d.h. bei 1700°C. $D_1$ stellt den Wert dar, um den die Porengröße bei einer vorgegebenen Ausgangsstruktur und bei festgelegter Haltezeit maximal vergrößert werden kann.

$T_0$ ist der Wendepunkt der Funktion. Zwischen $T_0 - T_1$ und $T_0 + T_1$ treten die größten Veränderungen in der Porengröße in Abhängigkeit von Temperaturschwankungen auf. Oberhalb von $T_0 + T_1$ werden die Porenöffnungen so groß, dass die Schalenstruktur verloren geht. Dieser Bereich (in Figur 2 als Phase IV dargestellt) führt zu sehr großen Porendurchgangsöffnungen die in speziellen Anwendungen mit sehr großen Beschichtungsmengen interessant ist.

Die oben angegebene Gleichung dient vorzugsweise als Hilfestellung bei dem erfindungsgemäßen Verfahren zur Herstellung der porösen Wabenstrukturen. Bei Festlegung aller Prozessparameter kann diese Gleichung herangezogen werden, um die gewünschte Temperatur zur Einstellung eines gewünschten Porendurchmessers festzulegen. Weiterhin lassen sich die maximal zulässigen Temperaturgradienten im Ofenprozess in Abhängigkeit von der maximal zulässigen Toleranz in der Porengröße berechnen.

Es hat sich gezeigt, dass vorzugsweise die Dauer der Haltezeit bei der Endtemperatur einen Einfluss auf $T_0$ und $T_1$ besitzt. So kann beispielsweise bei Verlängerung der Haltezeit der gleiche Effekt bei niedrigerer Temperatur erzielt werden.

Es handelt sich bei der oben beschriebenen Phase III in Figur 2 somit nicht um ein Porenwachstum, wie es beispielsweise in der Schrift EP 0 796 830 A1 für Temperaturen oberhalb von 2000°C beschrieben wird, sondern um eine Phasenumwandlung mit Umkristallisation, die mit einer Weitung der Porenöffnungen einhergeht. Die Erfinder haben weiterhin überraschend festgestellt, dass dies schon bei Temperaturen von etwa 1800°C passiert und dass man sowohl über die gewählte Endtemperatur als auch über die Haltezeit den Grad der Weitung der Porenöffnungen einstellen kann.

Die Auflösung der Begrenzungshäutchen kann dabei mit einer teilweisen, vorzugsweise vollständigen, Umwandlung von beta-SiC zu alpha-SiC einhergehen. Durch die Umkristallisation können die Atome der Begrenzungshäutchen oder Porenwände in die neu geformten Kristallite eingebaut werden. Diese neu geformten Kristallite weisen eine plättchenförmige Struktur auf.

Im Stand der Technik werden auch Verfahren zur Herstellung von reaktionsgeformten SiC Körpern beschrieben, bei denen die Umwandlung in Stickstoff durchgeführt wird. Die EP 0 796 830 A1 ist hierfür ein Beispiel. Im Gegensatz zu diesen Verfahren erfolgt bei dem erfindungsgemäßen Verfahren die Umwandlung von Silizium-haltigen Partikeln und Kohlenstoff-haltigen Partikeln zu SiC unter einer Inertgasatmosphäre wie Argon. Während in in der EP 0 796 830 A1 auf Grund des anwesenden Stickstoffs zunächst eine Nitridierung des Siliziums zu Siliziumnitrid erfolgt, das dann oberhalb von 1800°C zu SiC umgewandelt wird, kommt es im vorliegenden Verfahren ab ca. 1400°C bei der Reaktion unter Inertgas zur Bildung einer vorwiegend beta-SiC-haltigen Struktur. Ob es bei einem Verfahren unter Stickstoff überhaupt zu einem durchgängigen beta-SiC Gerüst kommt, ist fraglich, da bei diesen hohen Temperaturen je nach Temperaturführung auch ein weitestgehend direkter Übergang von Siliziumnitrid zu alpha-SiC erfolgen könnte.

Unabhängig von der temporären Bildung von beta-SiC sind die jeweiligen zu Grunde liegenden Reaktionsmechanismen grundlegend verschieden, was sich auch entscheidend auf die sich ausbildende Mikrostruktur auswirkt. Während es sich bei der Nitridierung von Silizium um eine Reaktion zwischen gasförmigem Stickstoff und festem Silizium (gasförmig-fest-Reaktion) bzw. nach dem Schmelzen des Siliziums um eine Reaktion zwischen gasförmigem Stickstoff und flüssigem Silizium (gasförmig -flüssig-Reaktion) handelt, findet im Fall des hier beschriebenen reaktionsgeformten SiC eine Reaktion zwischen dem festen Kohlenstoff und dem geschmolzenen Silizium statt (fest-flüssig-Reaktion).

Die sich aus den Reaktionsmechanismen ergebenden Mikrostrukturen sind grundlegend verschieden, da im Fall der Nitridierung zum einen zusätzlicher Stickstoff in die Struktur - unter Masse- und Volumenzunahme - eingebaut wird und sich zum anderen durch eine Grenzflächenreaktion auch eine feste, umgreifende Siliziumnitridhaut bildet, die ein Fließen des geschmolzenen Siliziums behindert.

Im Fall der fest-flüssig-Reaktion des hier zugrundeliegenden Verfahrens kann dagegen das geschmolzene Silizium fließen und die charakteristischen großen Poren hinterlassen, die eine entscheidende Charakteristik für den in Schritt a) des erfindungsgemäßen Verfahrens bereitgestellten, vorzugsweise reaktionsgeformten, porösen beta-SiC-haltigen Formkörper ist.

Bei diesem Reaktionsablauf kann auch das Element der 3. Hauptgruppe des Periodensystems der Elemente, bevorzugt Bor oder Aluminium oder Mischungen davon, besonders bevorzugt Aluminium, eine entscheidende Rolle einnehmen, da es den Schmelzpunkt von Silizium senkt, das Silizium also schon bei niedrigeren Temperaturen flüssig wird und sich in der Kohlenstoffstruktur verteilen kann.

Vorzugsweise läuft durch die niedrigere Temperatur die Reaktion zu SiC noch nicht so schnell ab, so dass auch das Silizium länger Zeit zum Fließen und Verteilen hat.

Vorzugsweise verringert die Zugabe des Elementes der 3. Hauptgruppe des Periodensystems der Elemente, bevorzugt Bor oder Aluminium oder Mischungen davon, besonders bevorzugt Aluminium, weiterhin den Benetzungswinkel des Siliziums auf Kohlenstoff und ermöglicht ein Spreiten des Siliziums in dem Kohlenstoffgerüst. Vorzugsweise bildet sich durch das Umverteilen des geschmolzenen Siliziums erst die charakteristische Hohlraumstruktur, wobei die Häutchen zwischen den großen Primärporen als Zeugnisse einer ersten Reaktion zwischen dem geschmolzenen Silizium und dem amorphen, festen Kohlenstoff der pyrolysierten Stärke angesehen werden können.

Dem Element der 3. Hauptgruppe des Periodensystems der Elemente, bevorzugt Bor oder Aluminium oder Mischungen davon, besonders bevorzugt Aluminium, kommt somit auch eine grundlegend andere Bedeutung, als wie in der US 4,777,152 beschrieben, zu. Während in diesem Fall wohl die Umwandlung von beta-SiC, das als ursprünglicher Rohstoff in Form von SiC-Körnern eingesetzt wurde, zu alpha-SiC erleichtert wird, hilft es nicht, die typische Hohlraumstruktur dieser Erfindung zu erreichen. Diese ist, wie oben beschrieben, nur durch die Kombination von reaktionsgeformtem SiC unter Inertgasatmosphäre und dem unterstützenden Einsatz von einem Element der 3. Hauptgruppe des Periodensystems der Elemente, bevorzugt Bor oder Aluminium oder Mischungen davon, besonders bevorzugt Aluminium, möglich. Über die anderen Verfahren wird dagegen die typische Mikrostruktur einer Kornkeramik erhalten, die nicht die mikrostrukturellen Vorteile der hier erhaltenen Mikrostruktur aufweist.

Die bei der Umwandlung von beta-SiC zu alpha-SiC neu geformten Kristallite mit einer vorzugsweise plättchenförmigen Form weisen vorzugsweise ein Länge- zu Dickenverhältnis von 5:1 oder größer auf und bestehen zu mehr als 80 Gew.-%, vorzugsweise zu mehr als 90 Gew.-%, vorzugsweise zu mehr als 95 Gew.-%, jeweils bezogen auf das Gesamtgewicht an SiC, aus alpha-SiC.

Vorzugsweise weisen die plättchenförmigen Kristallite eine Länge zwischen 0,1 $\mu$m und 100 $\mu$m, besonders bevorzugt zwischen 0,1 $\mu$m und 10 $\mu$m, auf.

Ein weiterer Vorteil der neu entstandenen Struktur ist somit die Tatsache, dass sie aus plättchenförmigen Kristalliten zusammengesetzt ist, welche zunächst über eine reine Phasenumwandlung entsteht, d.h. es liegt nach wie vor ein kontinuierliches dreidimensionales, vorzugsweise nicht gesintertes, SiC-Gerüst vor:

Der in Schritt b) erhaltene poröse alpha-SiC-haltige Formkörper der vorliegenden Erfindung umfasst vorzugsweise ein dreidimensionales, durchgehendes, alpha-SiC-Gerüst.

Das gebildete alpha-SiC weist hierbei vorzugsweise auch eine typische plättchenförmige, hexagonale Kristallitform auf, während bei dem reaktionsgeformten beta-SiC vorzugsweise weitestgehend keine Körner bzw. Korngrenzen zu erkennen sind.

Der poröse alpha-SiC-haltige Formkörper mit gasdurchlässiger, offenporiger Porenstruktur ist ein anorganischer, nicht-metallischer, vorzugsweise keramischer, Formkörper.

Vorzugsweise umfasst der erfindungsgemäße poröse alpha-SiC-haltige Formkörper SiC in einem Anteil von mehr als 80 Gew.-%, vorzugsweise von mehr als 90 Gew.-%, weiter bevorzugt von mehr als 95 Gew.-%, jeweils bezogen auf das Gesamtgewicht des Formkörpers.

Unter einem "dreidimensionalem, durchgehendem, alpha-SiC-Gerüst", das auch als "dreidimensionalem, durchgehendem, alpha-SiC-Skelett" bezeichnet werden kann, wird im Sinne der Erfindung eine alpha-SiC-Struktur verstanden, die alpha-SiC umfasst, welches ohne weitere Bindemittel eine feste, dreidimensionale, kontinuierliche Struktur ausbildet.

Vorzugsweise umfasst das dreidimensionale, durchgehende, alpha-SiC-Gerüst des erfindungsgemäßen porösen alpha-SiC-haltigen Formkörpers alpha-SiC in einem Anteil von mehr als 80 Gew.-%, vorzugsweise von mehr als 90 Gew.-%, weiter bevorzugt von mehr als 95 Gew.-%, jeweils bezogen auf das Gesamtgewicht des alpha-SiC-Gerüsts des Formkörpers.

Bei herkömmlichen, fremdphasen gebundenen SiC-Strukturen wird das SiC-Gerüst über ein Bindemittel, beispielsweise geschmolzenes Silizium gebunden. Der große Vorteil eines durchgehenden SiC-Gerüstes ist, dass der Formkörper wesentlich stabiler und beständiger gegenüber aggressiven Medien, wie beispielsweise Autoabgasen, ist. Den Erfindern ist es somit überraschenderweise gelungen einen porösen alpha-SiC-haltigen Formkörper bereitzustellen, der eine überragende chemische und mechanische Beständigkeit aufweist.

Aus der Literatur ist bekannt, dass beispielsweise die plättchenförmigen Kristallite des hexagonalen alpha-SiC ein gutes Bruchverhalten durch Rissumleitung an den plättchenförmigen Ebenen aufweist. Damit weist die neue Struktur des erfindungsgemäßen porösen alpha-SiC-haltigen Formkörpers vorzugsweise eine höhere Bruchzähigkeit und Thermoschockstabilität auf als ein SiC Formkörper mit globularer Kornstruktur bzw. eine entsprechende Kornkeramik, was beispielsweise in Hinsicht auf die Verwendung als Filter, vorzugsweise Rußfilter, bedeutsam ist.

Bei einer bevorzugten Ausführungsform liegt das alpha-SiC als hexagonales alpha-SiC und/oder rhomboedrisches alpha-SiC, vorzugsweise hexagonales alpha-SiC, vor.

Weiter bevorzugt liegt das alpha-SiC wenigstens teilweise im 2H-, 4H-, 6H-, 8H-, 10H-, 14H- und/oder 15R-Polytyp vor.

Bei einer weiter bevorzugten Ausführungsform des erfindungsgemäßen, porösen alpha-SiC-haltigen Formkörpers weist die gasdurchlässige, offenporige Porenstruktur des Formkörpers Poren auf, deren mittlerer Porendurchmesser, der vorzugsweise mittels Quecksilberporosimetrie bestimmt wird, größer ist als die Größe der Kristallite sowie die mittlere Dicke der Porenwände, die aus den Kristalliten aufgebaut ist.

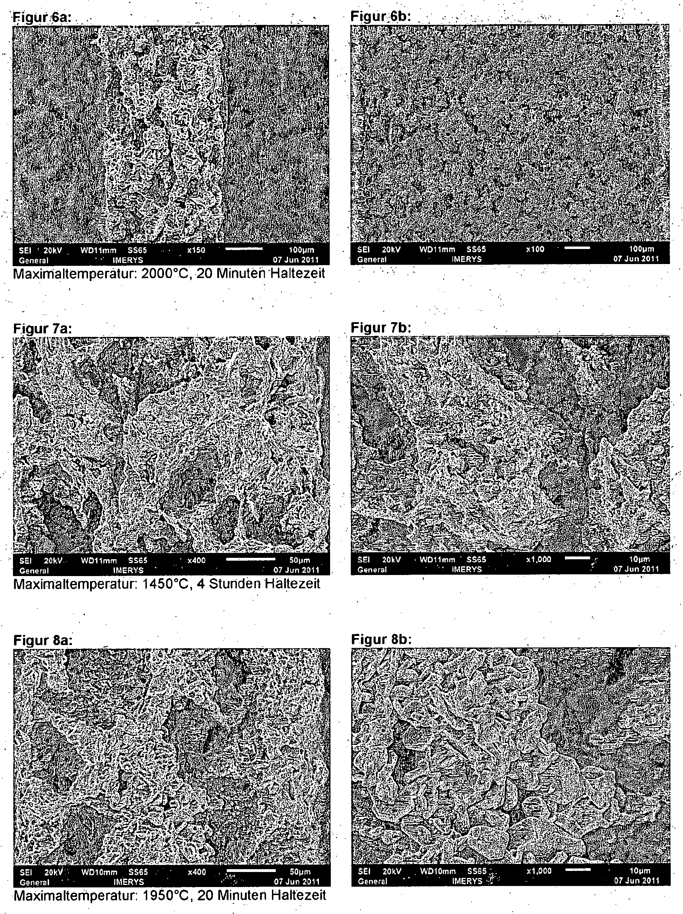

Verdeutlicht wird dies durch die schematische Abbildung in Figur 2 sowie insbesondere der elektronenmikroskopischen Aufnahme in Figur 8a, in der die Größenverhältnisse der Porenwände, die aus den Kristalliten aufgebaut sind, im Verhältnis zu den Poren gut zu erkennen sind.

Die mittlere Dicke der Porenwände und deren Vergleich zum mittleren Porendurchmesser lässt sich beispielsweise mit Hilfe von Mikro-Computertomographie (Micro-CT) ermitteln. Eine weitere Möglichkeit besteht darin, Schliffe herzustellen und davon elektronenmikroskopische Bilder anzufertigen. Wandstärken und Porendurchmesser können ausgemessen und mit statistischen Verfahren ausgewertet und verglichen werden.

Bei einer weiter bevorzugten Ausführungsform des erfindungsgemäßen, porösen alpha-SiC-haltigen Formkörpers weist die gasdurchlässige, offenporige Porenstruktur des Formkörpers Poren mit einem mittleren Porendurchmesser, der vorzugsweise mittels Quecksilberporosimetrie bestimmt wird, aus einem Bereich von 3 µm bis 50 µm, weiter bevorzugt von 5 µm bis 35 µm, und eine offene Porosität aus einem Bereich von 45 Vol.% bis 95 Vol.%, vorzugsweise von 50 Vol.% bis 85 Vol.%, vorzugsweise von 54 Vol.% bis 78 Vol.%, jeweils bezogen auf das Gesamtvolumen des Formkörpers, auf, wobei die durchgehend offenporige Porenstruktur des Formkörpers Poren aufweist, deren mittlerer Porendurchmesser, der vorzugsweise mittels Quecksilberporosimetrie bestimmt wird, größer ist als die Größe der Kristallite sowie die mittlere Dicke der Porenwände, die aus den Kristalliten aufgebaut ist.

Beta-SiC wird vorzugsweise durch die Anwesenheit von wenigstens einem Element aus der 3. Hauptgruppe des Periodensystems der Elemente, vorzugsweise Bor oder Aluminium oder Mischungen davon, weiter bevorzugt Aluminium, schon bei Temperaturen von etwa 1800°C teilweise bis vollständig in alpha-SiC umgewandelt. Die Phasenumwandlung führt vorzugsweise zu der Ausbildung von plättchenförmigen SiC-Kristalliten, die eine kontinuierlich zusammenhängende Struktur bilden.

Durch die Anwesenheit wenigstens eines Elements aus der 3. Hauptgruppe des Periodensystems der Elemente, vorzugsweise Bor oder Aluminium oder Mischungen davon, weiter bevorzugt Aluminium, findet diese Phasenumwandlung sehr schnell statt und ist je nach gewählter Endtemperatur beispielsweise schon nach 10 bis 20 Minuten abgeschlossen.

Das weitere Wachstum der alpha-SiC-Kristallite wird vorzugsweise ebenfalls durch die Anwesenheit wenigstens eines Elements aus der 3. Hauptgruppe des Periodensystems der Elemente, vorzugsweise Bor oder Aluminium oder Mischungen davon, weiter bevorzugt Aluminium, unterstützt. Schließlich kann dieses wenigstens eine Element aus der 3. Hauptgruppe des Periodensystems der Elemente, in Form eines ternären Carbides in die Gerüststruktur eingebaut werden.

Bei einer weiteren bevorzugten Ausführungsform umfasst der erfindungsgemäße poröse alpha-SiC-haltige Formkörper weiterhin wenigstens ein ternäres Carbid aus Silizium, Kohlenstoff und wenigstens einem Element aus der 3. Hauptgruppe des Periodensystems der Elemente, vorzugsweise Bor oder Aluminium oder Mischungen davon, weiter bevorzugt Aluminium.

Bevorzugt ist das wenigstens eine ternäre Carbid ein Carbid der allgemeinen Summenformel $Al_4C_3(SiC)_x$, wobei x eine ganze Zahl von 1 bis 4, vorzugsweise 1 oder 2, bedeutet, oder eine Mischung davon.

Bei einer weiter bevorzugten Ausführungsform ist das wenigstens eine ternäre Carbid ein Carbid der Formel $Al_4SiC_4$ oder ein Carbid der Formel $Al_4Si_2C_5$ oder eine Mischung davon.

Bei einer weiter bevorzugten Ausführungsform umfasst der erfindungsgemäße poröse alpha-SiC-haltige Formkörper das wenigstens eine ternäre Carbid in einem Anteil von 0,1 Gew.-% bis 10 Gew.-%, vorzugsweise von 0,25 Gew.-% bis 8 Gew.-%, vorzugsweise von 0,5 Gew.-% bis 5 Gew.-% jeweils bezogen auf das Gesamtgewicht an SiC.

Vorzugsweise weist das wenigstens eine ternäres Carbid aus Silizium, Kohlenstoff und wenigstens einem Element aus der 3. Hauptgruppe des Periodensystems der Elemente, vorzugsweise Bor oder Aluminium oder Mischungen davon, weiter bevorzugt Aluminium, ebenfalls eine plättchenförmige Kristallstruktur auf.

Welche Carbide bzw. Mischungen davon sich bilden, hängt auch von der lokalen Temperatur und Zusammensetzung der Atmosphäre ab. Beispielsweise wird das Carbid der Formel $Al_4Si_2C_5$ bevorzugt in Anwesenheit von Stickstoff gebildet.

Stickstoff kann beispielsweise als zusätzliche Komponente oder aber über die Gasphase bei der Pyrolyse in Stickstoff aufgenommen werden.

Dabei besteht im System Al-C-N auch die Möglichkeit, dass sich je noch lokalen Temperatur- und Zusammensetzungsbedingungen Phasen der Art $Al_4C_3*xAlN$, wie beispielsweise $Al_5C_3N$, $Al_6C_3N_2$, $Al_7C_3N_3$ oder $Al_8C_3N_4$, bilden.

Sollten außerdem noch Verunreinigungen von Sauerstoff vorliegen, sind auch Phasen des Systems $Al_4C_3-Al_2O_3$, wie beispielsweise $Al_2OC$, $Al_4O_4C$, $2Al_2O_3*xAlN$, oder auch Phasen des Systems Al-C-O-N bzw. Si-Al-C.N-O in geringem Umfang möglich. Eine eindeutige Identifizierung der Phasen ist hierbei oft nur schwer möglich, da sie isomorph aufgebaut sind oder auch amorph ausgebildet sein können. Auch der isomorphe Einbau anderer Elemente sowie der Einbau von Elementen in anderen Phasen auf Grund eine gewissen Löslichkeit ist möglich.

Sauerstoff kann beispielsweise über die Gasphase bei der Pyrolyse in technischem Stickstoff aufgenommen oder aber über die auf Metallen üblichen Oxidhaut ins System gebracht werden. Auch können die verwendeten Prozessadditive Stickstoff und Sauerstoff in ihrem molekularen Aufbau aufweisen.

Bei einer weiteren bevorzugten Ausführungsform umfasst der erfindungsgemäße, poröse alpha-SiC-haltige Formkörper somit weiterhin Stickstoff- und/oder Sauerstoffatome in einem Stoffmengenanteil von kleiner 5 Atom-%, weiter bevorzugt von kleiner 3 Atom-%, jeweils bezogen auf die Summe aller Bestandteile des Formkörpers.

Es ist weiterhin bevorzugt, dass der erfindungsgemäße, poröse alpha-SiC-haltige Formkörper nach seiner Herstellung in einer Sauerstoff-haltigen Atmosphäre bei Temperaturen oberhalb von 900°C oxidiert wird, wodurch eine sehr dünne $SiO_2$-Schicht auf der SiC-Oberfläche erzeugt wird.

Haben sich ternäre Carbide mit Aluminium gebildet, so ergibt sich als weiterer Vorteil, dass durch eine nachgeschaltete Oxidation somit nicht nur eine dünne $SiO_2$-Schicht auf dem SiC erzeugt werden kann, sondern eine $SiO_2$ / Mullit-Schicht. Dadurch wird die chemische Beständigkeit des SiC-Gerüstes vorzugsweise nochmals verbessert.

Weiterhin kann es in Schritt b) des erfindungsgemäßen Verfahrens zu einem Gewichtsverlust aufgrund des Abdampfens von Silizium- haltigen und / oder Aluminium-haltigen Phasen kommen.

Bei langen Haltezeiten und hohen Temperaturen kann ein leichter Schrumpfungsprozess auftreten.

Erfindungsgemäß wird ein poröser alpha-SiC-haltiger Formkörper als Filter, vorzugsweise Partikelfilter, verwendet, wobei der poröse alpha-SiC-haltige Formkörper dann als Wabenfilterelement ausgebildet ist. Erfindungsgemäß sind die Kanäle nicht durchgehend. Die Kanäle sind wechselseitig verschlossen. Das heißt, die im wesentlichen parallel zueinander liegenden Kanäle sind abwechselnd an ihrem einen oder anderen Ende verschlossen.

Dies ermöglicht die Verwendung eines derart ausgestalteten porösen alpha-SiC-haltigen Formkörpers als Wandstromfilter, wobei das zu filtrierende Medium durch die Wandung von einem Kanal in den Nachbarkanal übertritt und ggf. vorhandene partikulären Verunreinigungen zurückgehalten werden. Bei einer vorteilhaften Ausführungsform weist der, poröse alpha-SiC-haltige Formkörper Kanäle und poröse Kanalwände auf.

Der poröse alpha-SiC-haltige Formkörper weist vorzugsweise eine quaderförmige oder zylindrische Formgebung auf. Die Formkörper können auch einen polygonalen Querschnitt, beispielsweise hexagonalen oder oktogonalen Querschnitt, aufweisen. Vorzugsweise weist der poröse alpha-SiC-haltige Formkörper sich entlang der Längsachse des Formkörpers erstreckende Kanäle auf, die wesentlichen parallel zueinander angeordnet sind.

Ein erfindungsgemäßer Filter, vorzugsweise Rußpartikelfilter, umfasst wenigstens einen erfindungsgemäßen porösen alpha-SiC-haltigen Formkörper wobei der Formkörper als Wabenfilterelement ausgebildet ist, bei dem die Ein- und Ausströmöffnungen der Durchströmkanäle wechselseitig verschlossen sind.

Vorzugsweise besteht der Filter aus mehreren erfindungsgemäßen porösen alpha-SiC-haltigen Formkörpern, wobei diese als Wabenfilterelemente, bei denen die Ein-und Ausströmöffnungen der Durchströmkanäle wechselseitig verschlossen sind, ausgebildet sind, die durch einen Klebstoff verbindbar oder verbunden sind. Unter dem Begriff Klebstoff im Sinne der Erfindung wird eine Masse auf keramischer Basis verstanden, die chemisch oder hydraulisch aushärtet und bis mindestens 1000°C, vorzugsweise bis 1600°C, temperaturbeständig ist.

Ein erfindungsgemäß in einem Filter zu verwendender poröser alpha-SiC-haltiger Formkörper oder ein erfindungsgemäß daraus hergestellter Filter, vorzugsweise Rußpartikelfilter, kann beispielsweise in einem Abgassystem eines Kraftfahrzeuges oder einer Abgasbehandlungsanlage eines Verbrennungsmotors angeordnet sein.

Ferner ist ein erfindungsgemäß in einem Filter zu verwendender poröser alpha-Siehaltiger Formkörper oder ein erfindungsgemäß daraus hergestellter Filter, vorzugsweise Rußpartikelfilter, geeignet, Feinstpartikel aus einem Verbrennungsprozess zurückzuhalten, die im zunehmenden Maße eine Umweltbelastung darstellen.

Die charakteristische Porenverteilung des erfindungsgemäß in einem Filter zu verwendenden Formkörpers ist für die effektive Rußfiltration in einer Abgasanlage eines Dieselmotors vorteilhaft. Sind die Poren zu groß, so lagern sich die Rußpartikel zunehmend in der Wandstruktur ab und es kommt zu einem Tiefenfiltereffekt, d.h. die Rußpartikel verursachen in der Wand einen starken Anstieg des Druckabfalls. Bei dem erfindungsgemäß in einem Filter zu verwendenden porösen Formkörper sind die Poren so fein, so dass sich der Ruß in Form einer porösen Schicht auf der Oberfläche des Filters ablagert. In diesem Fall ist der Druckabfallanstieg durch diese poröse Oberflächenschicht geringer als bei dem Tiefenfiltereffekt.

Beispielsweise weist ein runder erfindungsgemäßer Filter mit einem Durchmesser von 5,66 Zoll und einer Länge von 7 Zoll, der aus 9 Filtersegmenten mit einer Zelligkeit von 300 cpsi, einer Zellwandstärke von 12 milli-inch (mil), einer Porosität von 60 Vol.-%, bezogen auf das äußere Volumen des Wabenfilters wobei das Volumen offener Kanäle nicht mitgerechnet wurde, und einem mittleren Porendurchmesser von 21 $\mu$m aufgebaut ist, bei einem Abgasmassenstrom von 250 kg/Std. und einer Temperatur von 240°C einen Gegendruck von 20 mbar auf. Dieser erhöht sich bei Beladung auf 5 g/L mit Ruß auf einen Wert von 68 mbar. Ein Filter aus dem Stand der Technik, beispielsweise Silizium gebundenes SiC in Analogie zur EP 1 277 714 A1, der die gleichen Abmaße aufweist und ebenfalls aus 16 Filtersegmenten mit einer Zelligkeit von 300 cpsi, einer Zellwandstärke von 12 mil, einer Porosität von 52 Vol.%, bezogen auf das äußere Volumen des Wabenfilters wobei das Volumen offener Kanäle nicht mitgerechnet wurde, und einem mittleren Porendurchmesser von 15 $\mu$m aufgebaut ist, weist bei einem Abgasmassenstrom von 250 kg/Std. und einer Temperatur von 240°C ebenfalls einen Gegendruck von 20 mbar auf. Dieser erhöht sich bei Beladung auf 5 g/L mit Ruß jedoch auf einen Wert von 100 mbar. Der erfindungsgemäße Filter weist somit einen deutlich geringeren Tiefenfiltereffekt auf als der Filter aus dem Stand der Technik.

Bei einer weiteren bevorzugten Ausführungsform des Filters enthält ein erfindungsgemäß in einem Filter zu verwendender poröser alpha-SiC-haltiger Formkörper mindestens einen Oxidationsschritt bei dem eine dünne $SiO_2$ bzw. Mullitschicht auf der Kristallitstruktur gebildet wird, die die chemische und mechanische Stabilität erhöht.

Bei einer weiteren bevorzugten Ausführungsform des Filters enthält ein erfindungsgemäßer poröser alpha-SiC-haltiger Formkörper mindestens eine katalytisch aktive Beschichtung.

Ein erfindungsgemäß in einem Filter zu verwendender poröser alpha-SiC-haltiger Formkörper oder ein erfindungsgemäß daraus hergestellter Filter kann somit auch als Katalysatorträgerstruktur sowie entsprechenden Katalysatorsystemen verwendet werden.

Geeignete katalytisch aktive Beschichtungen zur verbesserten Rußoxidation und zur Reduzierung von Stickoxiden sowie Kombinationen davon sind aus dem Stand der Technik bekannt.

Die Erfindung wird nachfolgend durch Beispiele erläutert, ohne hierauf beschränkt zu sein.

**Figuren**

Figur 1 zeigt eine elektronenmikroskopische 1000-fache Vergrößerung eines Formkörpers aus reaktionsgebundenem beta-SiC.

Figur 2 zeigt schematisch die Öffnung der Durchgangsöffnungen bei steigender Temperatur. Der Gesamtprozess ist in vier Phasen aufgeteilt:In Phase I findet die Umsetzung von Silizium und Kohlenstoff zu SiC statt; der beta-SiC Formkörper entsteht. In Phase II wird die Umsetzung vervollständigt. Bei Annäherung an 1850°C setzt die Umwandlung von beta-SiC zu alphas-SiC ein. Phase III: In dieser Phase findet die Umwandlung von beta- zu alpha-SiC vollständig statt und die Porendurchgangsöffnungen weiten sich auf. In dieser Phase können gezielt die Porenöffnungsweiten über die Temperatur und Haltezeit eingestellt werden. Phase IV: Die Umwandlung zu alpha-SiC ist abgeschlossen. Es setzt nun fortschreitendes Kristallwachtum mit klassischer Rekristallisation ein, d.h. kleine Kristallite lösen sich auf und lagern sich an die großen Kristallite an; es entstehen sehr große Porendurchgangsöffnungen.

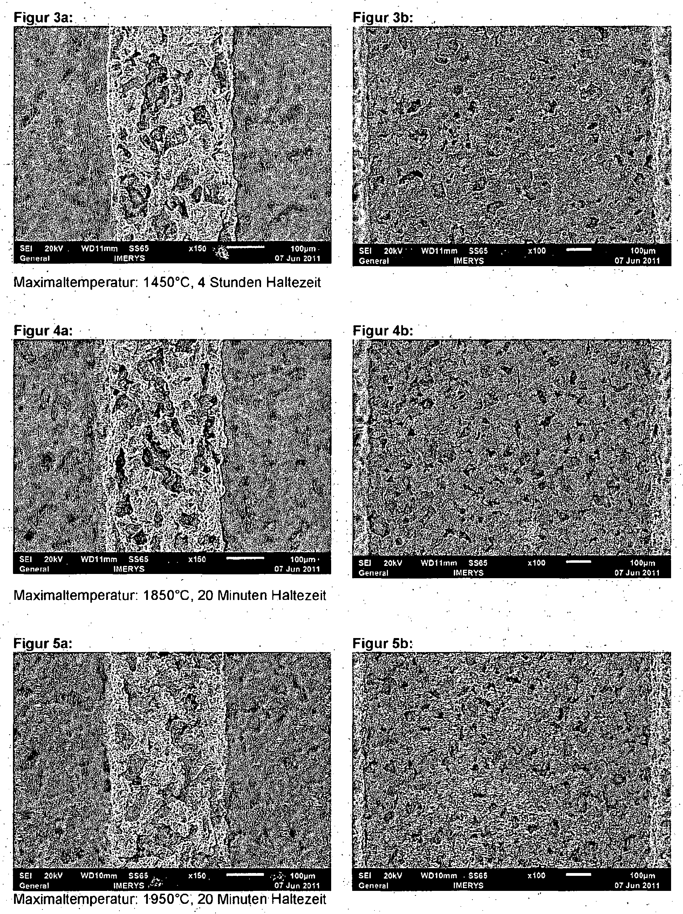

Figur 3 zeigt eine elektronenmikroskopische Vergrößerung eines SiC-Formkörpers aus Ausführungsbeispiel 1 nach Erhitzen auf eine Maximaltemperatur von 1450°C für 4 Stunden unter Argonatmosphäre. Figur 3a zeigt den Querschnitt einer Kanalwand mit 150-facher Vergrößerung. Figur 3b zeigt einen Blick auf eine Kanalwand mit 100-facher Vergrößerung.

Figur 4 zeigt eine elektronenmikroskopische Vergrößerung eines SiC-Formkörpers aus Ausführungsbeispiel 1 nach Erhitzen auf eine Maximaltemperatur von 1850°C für 20 Minuten unter Argonatmosphäre. Figur 4a zeigt den Querschnitt einer Kanalwand mit 150-facher Vergrößerung. Figur 4b zeigt einen Blick auf eine Kanalwand mit 100-facher Vergrößerung.

Figur 5 zeigt eine elektronenmikroskopische Vergrößerung eines SiC-Formkörpers aus Ausführungsbeispiel 1 nach Erhitzen auf eine Maximaltemperatur von 1950°C für 20 Minuten unter Argonatmosphäre. Figur 5a zeigt den Querschnitt einer Kanalwand mit 150-facher Vergrößerung. Figur 5b zeigt einen Blick auf eine Kanalwand mit 100-facher Vergrößerung.

Figur 6 zeigt eine elektronenmikroskopische Vergrößerung eines SiC-Formkörpers aus Ausführungsbeispiel 1 nach Erhitzen auf eine Maximaltemperatur von 2000°C für 20 Minuten unter Argonatmosphäre. Figur 6a zeigt den Querschnitt einer Kanalwand mit 150-facher Vergrößerung. Figur 6b zeigt einen Blick auf eine Kanalwand mit 100-facher Vergrößerung.

Figur 7 zeigt einen Ausschnitt des in Figur 3a dargestellten Wandquerschnitts mit 400-facher (Figur 7a) bzw. mit 1000-facher Vergrößerung (Figur 7b).

Figur 8 zeigt einen Ausschnitt des in Figur 5a dargestellten Wandquerschnitts mit 400-facher (Figur 8a) bzw. mit 1000-facher Vergrößerung (Figur 8b).

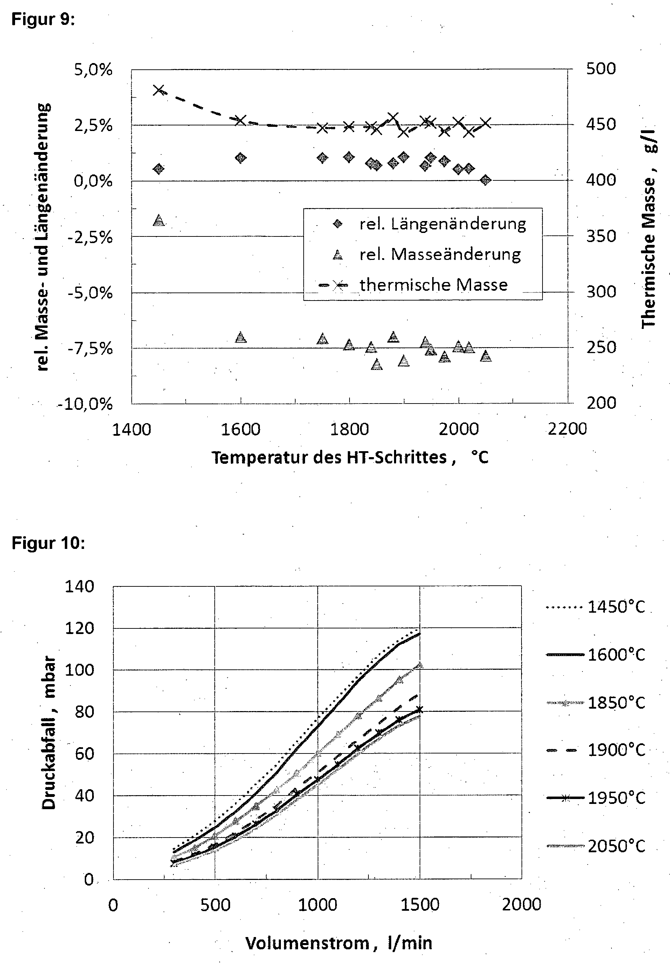

Figur 9 zeigt den Masseverlust und die Längenänderung, jeweils angegeben in % bezogen auf die Masse bzw. Länge der reaktionsgeformten beta-SiC-haltigen Formkörper vor der Wärmebehandlung, sowie die aus den äußeren Dimensionen (Länge*Breite*Höhe) und der Masse der Waben errechnete thermische Masse für verschiedene Maximaltemperaturen, jeweils angegeben als Temperatur des HT-Schrittes, der in Ausführungsbeispiel 1 hergestellten porösen Formkörper.

Figur 10 zeigt die Druckverlustkurven ohne Rußbeladung bei ansteigenden Durchflußraten der in Ausführungsbeispiel 1 bei unterschiedlichen Maximaltemperaturen (1450°C, 1600°C, 1850°C, 1900°C, 1950°C oder 2050°C) hergestellten wechselseitig verschlossenen Wabenfilter (Breite und Höhe von 35mm, Länge 178 mm).

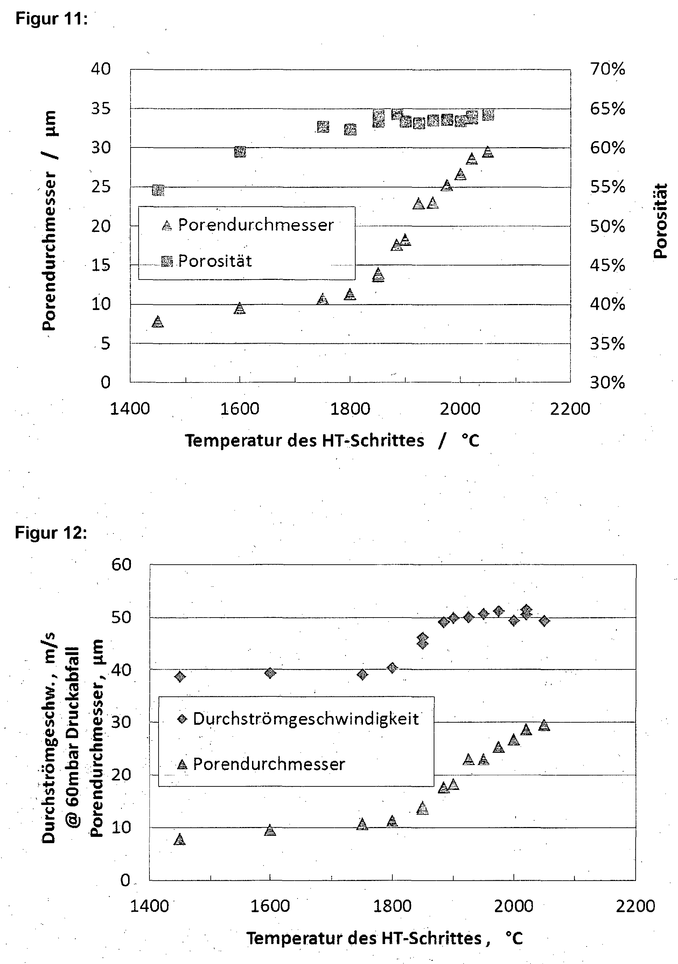

Figur 11 zeigt die mittels Quecksilberporosimetrie ermittelten Porositäten in Vol.-%, jeweils bezogen auf das äußere Volumen des Wabenfilters wobei das Volumen offener Kanäle nicht mitgerechnet wurde, und mittleren Porenduchmesser in $\mu$m der in Ausführungsbeispiel 1 bei unterschiedlichen Maximaltemperaturen, jeweils angegeben als Temperatur des HT-Schrittes, hergestellten wechselseitig verschlossenen Wabenfilter (Breite und Höhe von 35mm, Länge 178 mm).

Figur 12 zeigt den mittleren Porendurchmesser in $\mu$m und die Durchströmgeschwindigkeit durch die Kanalwand in m/s bei konstantem Druckabfall von 60 mbar der in Ausführungsbeispiel 1 bei unterschiedlichen Maximaltemperaturen, jeweils angegeben als Temperatur des HT-Schrittes, hergestellten wechselseitig verschlossenen Wabenfilter (Breite und Höhe von 35mm, Länge 178 mm).

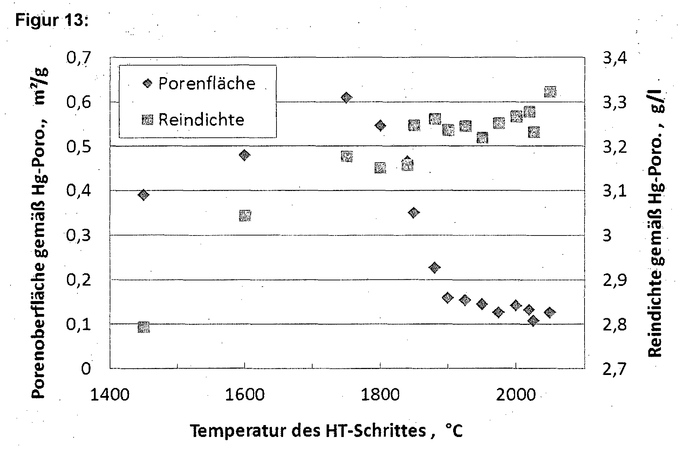

Figur 13 zeigt die aus den Ergebnissen der Quecksilberporosimetrie berechnete Reindichte (Skelettdichte) in g/l sowie spezifische Porenoberfläche in m$^2$/g der in Ausführungsbeispiel 1 bei unterschiedlichen Maximaltemperaturen, jeweils angegeben als Temperatur des HT-Schrittes, hergestellten wechselseitig verschlossenen Wabenfilter (Breite und Höhe von 35mm, Länge 178 mm).

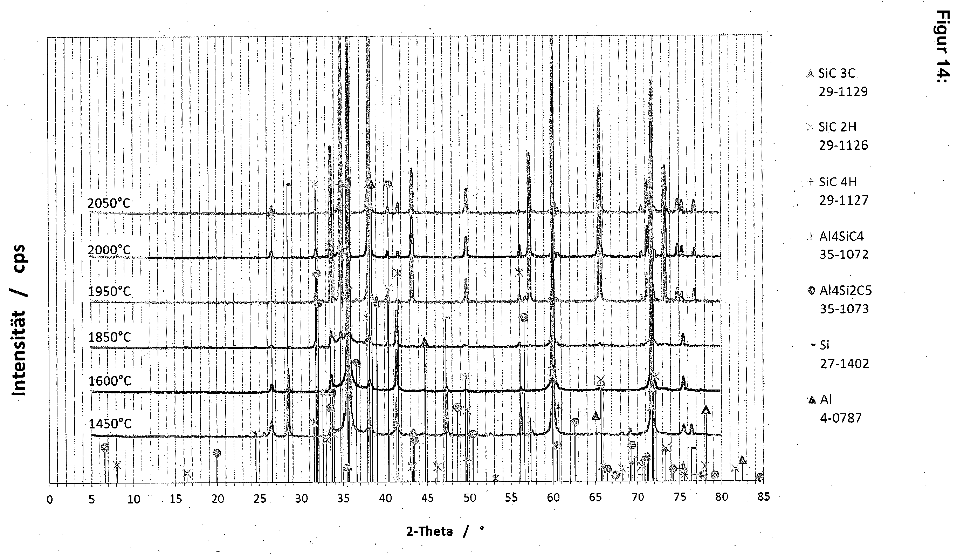

Figur 14 zeigt die jeweiligen XRD-Spektren (X-Ray Diffraction) der in Ausführungsbeispiel 1 bei unterschiedlichen Maximaltemperaturen hergestellten wechselseitig verschlossenen Wabenfilter (Breite und Höhe von 35mm, Länge 178 mm).

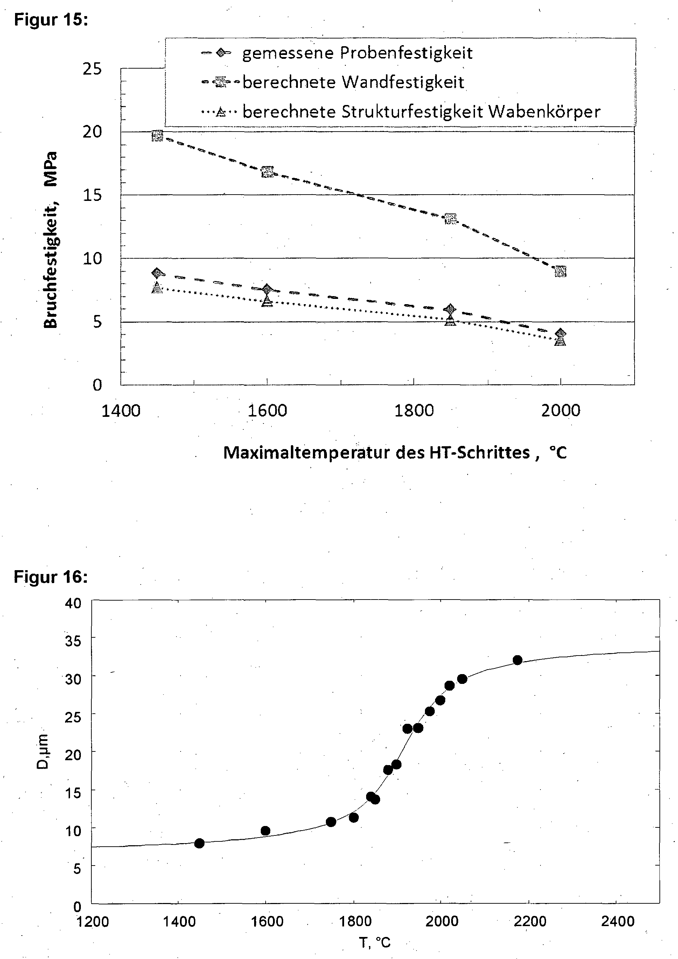

Figur 15 zeigt die auf der Basis der ASTM Norm Designation C 1674 - 08 ermittelte Festigkeit von Probekörpern der Dimensionen 10 Kanäle* 10 Kanäle * 120 mm als Mittelwert von jeweils 8 Probekörpern, die in Ausführungsbeispiel 1 bei unterschiedlichen Maximaltemperaturen, jeweils angegeben als Temperatur des HT-Schrittes, hergestellt wurden. Mit aufgetragen sind die gemäß der ASTM C 1674-08 berechneten Werte für die Wandfestigkeit (wall fracture strength in ASTM) und der Strukturfestigkeit des Wabenkörpers (honey comb structure strength in ASTM).

Figur 16 zeigt die aus den gemessenen Porendurchmesser (D) der in Ausführungsbeispiel 1 bei unterschiedlichen Maximaltemperaturen, jeweils angegeben als Temperatur des HT-Schrittes, hergestellten wechselseitig verschlossenen Wabenfilter (Breite und Höhe von 35mm, Länge 178 mm) zusammen mit einer Anpassung dieser Messwerte an die Funktion des Porendurchmessers in Abhängigkeit von der Maximaltemperatur gemäß Gleichung (1).

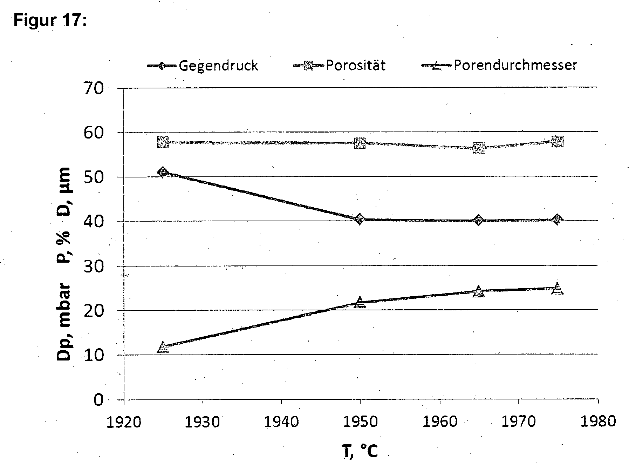

Figur 17 zeigt den Gegendruck (Dp) in mbar, die mittlere Porengröße (D) in $\mu$m und Porosität (P) in Vol.-%, jeweils bezogen auf das äußere Volumen des Wabenfilters wobei das Volumen offener Kanäle nicht mitgerechnet wurde, der in Ausführungsbeispiel 2 bei unterschiedlichen Maximaltemperaturen, jeweils angegeben als Temperatur des HT-Schrittes, hergestellten wechselseitig verschlossenen Wabenfilter (Breite und Höhe von 35mm, Länge 178 mm).

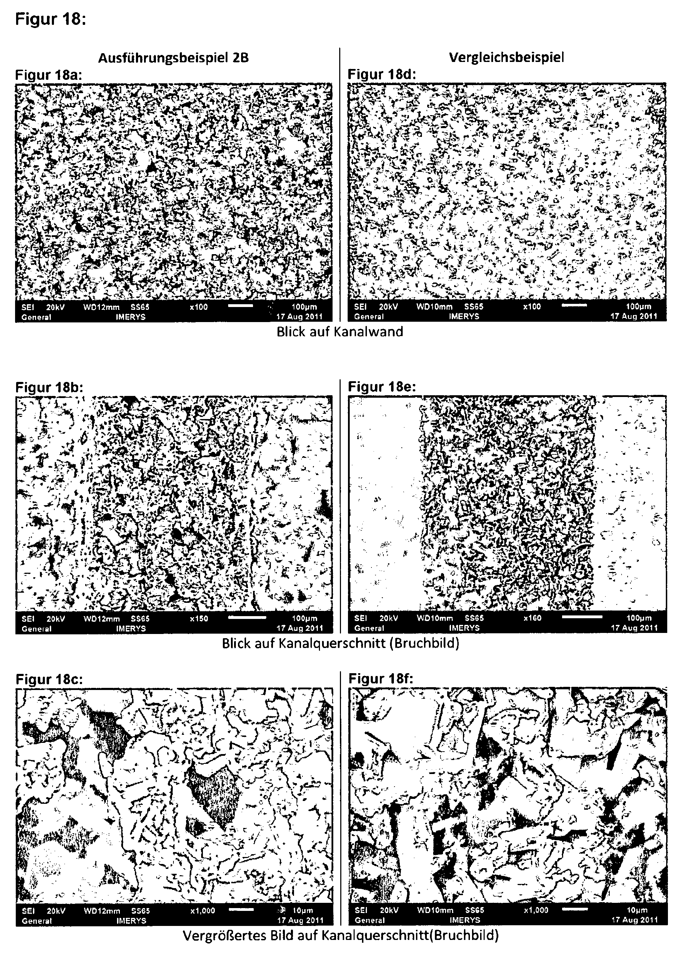

Figur 18 zeigt eine elektronenmikroskopische Vergrößerung eines SiC-Formkörpers aus Ausführungsbeispiel 2b (Figur 18a bis c) und eines SiC-Formkörpers aus Vergleichsbeispiel 3 (Figur 18d bis f). Figur 18a und 18d zeigt jeweils einen Blick auf eine Kanalwand mit 100-facher Vergrößerung. Figur 18b und 18e zeigt jeweils den Querschnitt einer Kanalwand mit 150-facher bzw. 160-facher Vergrößerung. Figur 18c und 18f zeigt jeweils einen Ausschnitt des in Figur 18b btw. 18e dargestellten Wandquerschnitts mit 1000-facher Vergrößerung.

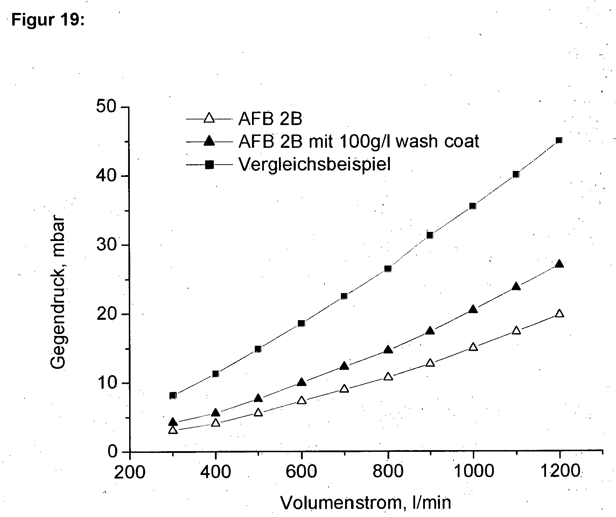

Figur 19 zeigt den Gegendruck ohne Rußbeladung bzw. mit Rußbeladung (100g/l) bei ansteigenden Durchflußraten eines SiC-Formkörpers aus Ausführungsbeispiel 2b ("AFB 2B" bzw. "AFB 2B mit 100g/l wash coat") eines SiC-Formkörpers aus Vergleichsbeispiel 3 ("Vergleichbeispiel").

**Ausführungsbeispiel 1 (AFB 1)**

Auf der Basis der in den Dokumenten EP1 741 685 A1, US 7,648,932 B2 und US 7,867,313 B2 beschriebenen Verfahren wurden reaktionsgeformte beta-SiC-haltige Formkörper hergestellt. Die Silizierung wurde dabei bei einer Temperatur bei 1450°C durchgeführt.

Die reaktionsgeformten beta-SiC-haltige Formkörper wurden nachfolgend einer Wärmebehandlung unterzogen, wobei die Formkörper jeweils auf verschiedene Maximaltemperaturen (1450°C, 1600°C, 1750°C, 1800°C, 1840°C, 1850°C, 1885°C, 1900°C, 1925°C, 1950°C, 1975°C, 2000°C, 2020,1 °C oder 2050°C) erhitzt wurden. Dabei wurde der Effekt der Temperaturbehandlung auf die Porenstruktur der SiC-Formkörper_und deren Filtereigenschaften untersucht.

Die Haltezeit bei Maximaltemperatur betrug 20 min. In einigen Fällen wurde der Einfluss längerer Haltezeiten untersucht.

Für die Untersuchungen des Einflusses der Temperaturbehandlung wurden je 3 Wabenkörper der Dimension 35mm*35mm*210mm (Höhe*Breite*Länge) gleichzeitig einer Temperaturbehandlung unterzogen. Alle verwendeten Waben stammten aus einem Extrusionslauf. Alle verwendeten Waben wurden in einem Lauf pyrolysiert.

Die Zusammensetzung der Extrusionsmasse zur Herstellung aller in dieser Versuchsreihe verwendeter Formkörper ist in Tabelle 1 angegeben.

Tabelle 1: Zusammensetzung der Extrusionsmasse

| Komponente | Anteil, Gewichts-% |
|---|---|
| Graphit | 17 % |
| Pyrolysebindemittel | 8 % |
| Silizium | 45 % |
| Aluminium | 4,8 % |
| Bindemittel | 5,7 % |

(fortgesetzt)

| Komponente | Anteil, Gewichts-% |
|---|---|
| **Wasser** | 16 % |
| **Porenbildner** | 3 % |
| **Plastifizierer** | 0,5 % |

Als Graphit wurde ein feingemahlener Elektrodengraphit der Firma Richard Anton KG (Gräfelfing, DE) mit einer mittleren Korngröße von ca. 17 $\mu$m verwendet. Das Siliziumpulver wurde von der Firma Elkem AS bezogen. Das Pulver hatte eine mittlere Partikelgröße von ca. 65$\mu$m.

Als Pyrolysebindemittel wurde eine Stärkelösung der Firma Zschimmer und Schwarz GmbH & Co KG (Lahnstein, DE) eingesetzt. Als Aluminium wurde ein Pulver der Firma Grimm Metallpulver GmbH (Roth, DE) verwendet. Als Bindemittel wurden Methocel-Typen von DOW eingesetzt.

Porenbildner war ein Polyamidpulver der Firma Evonik Industries AG (Essen, DE). Als Extrusionshilfsmittel wurde ein Polyoxyethylen der Firma Zschimmer und Schwarz verwendet. Das verwendete Wasser war entmineralisiert.

Zunächst wurden die Trocken- und Nasskomponenten separat für 30 Minuten zur Homogenisierung getrennt vermischt. Anschließend wurden die beiden Vormischungen in einem Doppel-Z-Kneter für 4 Stunden geknetet. Die Extrusion erfolgte mit einer Kolbenstrangpresse. Nach dem Extrudieren wurden das Extrudat in Formköper der Länge 210 mm geschnitten. Höhe und Breite der Waben war 35mm*35mm. Das verwendete Mundstück für quadratische Waben mit quadratischen Kanälen hatte ein Zelligkeit von 300 cpsi (cells per square inch). Wandstärke gemäß Mundstück betrug 11,5 mils (milli-inch).

Die Trocknung der Segmente erfolgte mit Hilfe von Mikrowellen. Nach vollständiger Trocknung (Restfeuchte 1-2 Masse%) im Trockenschrank wurden alle Waben in einem Lauf pyrolysiert. Hierbei wurden die Waben unter fließendem Stickstoff (technische Qualität 2.8) langsam auf 850°C aufgeheizt. Dabei wurden die organischen Komponenten zersetzt und ausgetrieben bzw. in nichtflüchtiges Pyrolysat-umgewandelt, das in den Formkörpen verblieb.

Für die Silizierung der Formkörper wurden jeweils drei Waben in einem Graphitofen unter leichtem Argonfluss (Argon Qualität 5.0) zunächst auf 1450°C aufgeheizt. Die Haltezeit betrug zwei Stunden. Anschließend erfolge als weitere Zwischenstufe eine Haltephase bei 1600°C für eine Stunde. Die Aufheizraten betrugen oberhalb von 1000°C jeweils 5K/m in.

Im Anschluss an diese Haltezeit wurden die Formkörper wiederum mit einer Aufheizraten von 5K/min auf die jeweilige Maximaltemperatur (1450°C, 1600°C, 1750°C, 1800°C, 1840°C, 1850°C, 1885°C, 1900°C, 1925°C, 1950°C, 1975°C, 2000°C, 2020,1°C oder 2050°C) erhitzt und für 20 Minuten bzw. die angegebene Haltezeit auf der jeweiligen Maximaltemperatur gehalten.

Anschließend erfolgte die Abkühlung innerhalb von 20 Stunden auf Raumtemperatur.

Zu Vergleichszwecken wurden auch Formkörper für die Dauer von vier Stunden auf eine Temperatur von 1450°C erhitzt, ohne dass eine weitere Temperaturerhöhung durchgeführt wurde.

Eine nachfolgende Oxidation der Waben zur Erhöhung der Festigkeit sowie dem Ausbrennen von Rest-Kohlenstoff ist möglich und für den späteren Einsatz üblich, wurde für diese Versuche aber nicht durchgeführt.

An den jeweils erhaltenen SiC-Formkörpern wurden folgende Eigenschaften untersucht:

- Masseverlust
- Dimensionsänderungen
- Gegendruck von Waben mit wechselseitig verschlossenen Kanälen
- mechanische Stabilität von Probekörpern der Größe 10*10 Kanäle bei einer Länge von 120mm (4-Punkt Biegeversuch)
- Phasenanalyse mittels XRD
- Rasterelektronenmikroskopie
- Porosität und Porengrößenverteilung sowie Dichte mittels Quecksilberporosimetrie

Zum Teil wurden dafür die Wabenkanäle wechselseitig verschlossen:

**Untersuchung im Rasterelektronenmikroskop (REM)**

Die Untersuchung im REM zeigte deutlich auf, wie die Porenstruktur vor dem Öffnen der Durchgangsöffnungen und nach dem Öffnen der Durchgangsöffnungen aussieht.

In Figur 3 und 4 ist jeweils die Porenstruktur eines SiC-Formkörpers nach Erhitzen auf eine Maximaltemperatur

EP 2 597 075 B1

von 1450°C für 4 Stunden bzw. 1850°C für 20 Minuten dargestellt. Man erkennt schon kristallin aussehende Strukturen, aber auch noch viele amorph aussehende eierschalenförmige Strukturen.

In Figur 5 und 6 sieht man jeweils die Porenstruktur eines SiC-Formkörpers nach Erhitzen auf eine Maximaltemperatur von 1950°C und 2000°C für 20 Minuten. Die amorph aussehenden Bereiche sind verschwunden und es sind nur noch kristallin aussehende Bereiche erkennbar mit großen Porendurchgangsöffnungen.

Bei Temperaturen oberhalb von 2000°C steigt die Größe der Kristallite weiter an und die Mikrostuktur wird durch weitere Öffnung instabiler wie es sich bei der Probe 2000°C 20 Minuten Haltezeit bereits andeutet.

In den höheren Vergrößerungen in den Figuren 7 und 8 ist zu erkennen, dass die Mikrostruktur mit den großen Hohlräumen bei der Temperaturbehandlung erhalten bleibt. Die Ausgangsstruktur, die auf dem reaktionsgeformten SiC beruht, ist somit Grundlage für die Mikrostruktur des bei höheren Temperaturen behandelten Formkörpers. Gleichzeitig ist gut zu erkennen, dass der Aufbau des Skelettes von amorph aussehend zu fein kristallin aussehend übergegangen ist.

In Figur 9 sind der Masseverlust, die Längenänderung sowie die aus den äußeren Dimensionen (Länge\*Breite\*Höhe) und der Masse der Waben errechnete thermische Masse für verschiedene Maximaltemperaturen dargestellt.

Wie zu sehen ist, folgt auf den großen Masseverlust zwischen 1450°C und 1600°C ein nur noch geringerer weiterer Masseverlust. Ursache des Masseverlustes ist zunächst verdampfendes Aluminium sowie Silizium. Oberhalb von 1800°C kann in geringen Mengen auch SiC verdampfen.

Oberhalb on 1900°C tritt bei den Segmenten eine geringe Schrumpfung auf. Zwischen 1450°C und 1600°C liegt ein geringes Anschwellen vor, das auf Umlagerungsprozessen sowie der Erstarrungsanomalie des Restsiliziums beruht. Da sich die thermische Masse aus dem Volumen und dem Gewicht der Segmente ergibt, bleibt diese relativ konstant.

In Figur 10 sind die Druckverlustkurven wechselseitig verschlossener Waben (Länge 178 mm) ohne Rußbeladung bei ansteigenden Durchflussraten dargestellt. Eine deutliche Abnahme mit steigender Maximaltemperatur der Waben ist zu sehen, die im Bereich 1800°C und 1900°C nahezu sprunghaft erfolgt.

In Figur 11 sind die mittels Quecksilberporosimetrie ermittelten Porositäten und mittleren Porenduchmesser der bei unterschiedlichen Maximaltemperaturen hergestellten Waben dargestellt. Die Porosität steigt für den Temperaturbereich zwischen 1450°C und 1850°C um ca 10% bis 20% an, was auf das Verdampfen von Aluminium und Silizum und Umlagerungseffekte zurückzuführen ist. Auch die oben beschriebenen Quelleffekte zwsichen 1450°C und 1600°C erhöhen die Porosität der Waben. Oberhalb von 1850°C bleibt die Porosität nahezu konstant.

In Figur 12 sind die mittleren Porengrößen und die Durchflussgeschwindigkeit durch die Kanalwände bei konstantem Druckabfall der bei unterschiedlichen Maximaltemperaturen hergestellten Waben dargestellt.

Aus den Messungen der Quecksilberporosimetrie wurden auch die Reindichte (Skelettdichte) sowie die spezifische Porenfläche berechnet, die jeweils in Figur 13 dargestellt sind.

Auf Grund des Verdampfens von Aluminium und Silizium und der weiteren Reaktion von verbliebenem Kohlenstoff und Silizium zu SiC steigt die Reindichte des Materials mit steigender Maximaltemperatur kontinuierlich an. Der Anstieg der spezifischen Pörenfläche bis 1750°C ist ebenfalls auf das Verdampfen von Material sowie die weitere Reaktion zu SiC und somit die weitere Ausbildung der Mikrostruktur zu erklären.

Nach Abschluss der Reaktion lag eine Mikrostruktur aus einem aus SiC gebildeten Gerüst mit dünnen Häutchen vor, die ein Porensystem mit groben Poren bildeten. Die Poren waren wiederum über enge Durchgänge in der Häutchenstruktur miteinander verbunden. Die engen Durchgänge erklären die kleinen Porendurchmesser bei gleichzeitig hoher Porosität und großer spezifischer Porenfläche. Mit steigender Temperatur weiteten sich die Durchgangskanäle in den Häutchen bzw. die Häutchen lösten sich langsam auf, so dass der mittlere Porenöffnungsdurchmesser anstieg und die Porenfläche dagegen kleiner wurde, während die Porosität nahezu unverändert blieb.

Mittels Röntgenbeugung (XRD) wurde an pulverisierten Proben, der bei unterschiedlichen Maximaltemperaturen hergestellten Waben, die sich gebildeten kristallinen Phasen ermittelt. Die Proben wurden mit dem Diffraktometer D500 von Bruker AXS GmbH (Karlsruhe, DE) unter Verwendung der Software DIFFRAC plus im Bereich 5° - 80° 2 theta bei einer Schrittweite von 0,02° und einer jeweiligen Messzeit von 2 Sekunden (Gesamtmesszeit: ca. 2 Stunden) untersucht.

Die jeweiligen XRD-Spektren sind in Figur 14 dargestellt.

An Hand der dargestellten Messungen ist zu erkennen, dass beim Übergang von 1450°C auf 1750°C der Anteil an freiem Silizium und Aluminium stark zurückgeht. Ursache ist die weitere Reaktion zu SiC, aber auch das Verdampfen der Komponenten sowie die Bildung von dreikomponentigen Phasen wie $Al_4SiC_4$ oder $Al_4Si_2C_5$. Mit steigender Temperatur findet auch die Umwandlung von beta-SiC zu alpha-SiC statt, wobei sich zunächst die Type 2H später dann auch die Phasen 4H und andere bilden. Oberhalb von 1950°C kann beta-SiC nicht mehr nachgewiesen werden.

Neben diesen Hauptphasen können auch stickstoffhaltige oder sauerstoffhaltige Phasen in geringen Anteilen vorliegen. Diese sind auf Grund der geringen Konzentrationen nicht zu ermitteln und weisen auf Grund des meist isomorphen Einbaus zudem ähnliche Reflexe beim XRD auf.

Auf Grund der steigenden Porenöffnungsdurchmesser sowie dem Verdampfen von Material verringert sich die mechanische Festigkeit der Wabenkörper. In Figur 15 ist die auf der Basis der ASTM Norm Designation C 1674 - 08 ermittelte Festigkeit von Probekörpern der Dimensionen 10 Kanäle* 10 Kanäle* 120 mm als Mittelwert von jeweils 8 Probekörpen dargestellt. Es ist zu erkennen, dass die mechanische Festigkeit der Waben mit steigender Siliziertemperatur abnimmt. Die Festigkeit ist aber für eine Verarbeitung zu Filtern überraschenderweise ausreichend.

**Auswertung des Porendurchmessers in Abhängigkeit von der Temperatur.**

Eine Anpassung der Porositätsdaten erfolgte mittels Arcustangens(x) gemäß der Formel (1):

$$D_{pore}(T) = D_0 + \frac{D_1}{\pi} \cdot \left\{ \frac{\pi}{2} + \tan^{-1}\left(\frac{T - T_0}{T_1}\right) \right\} \tag{1}$$

Für die obigen Proben erhält man folgende Parameter: $D_0$ = 6,35 µm, $D_1$ = 28,2 µm, $T_0$ = 1916°C, $T_1$ = 85,7°C. Das zugehörige Diagramm ist in Figur 16 dargestellt.

Für das in dieser Versuchsreihe gewählte Setup für den Ofenprozess zur Silizierung der Waben kann man somit für den gewünschten Porendurchmesser $D_{pore}$ = 20 ±2 µm eine Temperaturvorgabe von 1925 ± 50°C ableiten.

Als entscheidend ist dabei auch die Energie pro Besatz zu sehen, die sich aus den Ofenaufzeichnungen jedoch nicht umfassend genug ermitteln lässt.

**Ausführungsbeispiel 2a (AFB 2a):**

Die verwendeten Formkörper wurden wie in Ausführungsbeispiel 1 beschrieben hergestellt. In der Rezeptur wurde auf die Verwendung von Porenbildnern verzichtet und ein Graphit mit einer mittleren Korngröße von ca. 11 µm verwendet, so dass sich eine Zusammensetzung gemäß Tabelle 2 ergab.

Tabelle 2: Zusammensetzung der Extrusionsmasse

| Komponente | Anteil, Gewichts-% |
|---|---|
| Graphit | 18,5 % |
| Pyrolysebindemittel | 8,5 % |
| Silizium | 48,2 % |
| Aluminium | 5,3 % |
| Bindemittel | 4 % |
| Wasser | 15 % |
| Plastifizierer | |

Im Unterschied zu Ausführungsbeispiel 1 wurde für diese Waben bei den jeweiligen Endtemperaturen von 1925°C, 1950°C, 1965°C und 1975°C eine Haltezeit von zwei Stunden gewählt.

Wie in Ausführungsbeispiel 1 wurden auch hier Formkörper mit einer Breite und Höhe von 35mm und einer Länge von 178mm, bei denen die Ein- und Ausströmkanäle wechselseitig verschlossen waren, hergestellt und auf Gegendruck vermessen. Das Ergebnis ist in Figur 17 dargestellt.

Wie Figur 17 zu entnehmen ist, reichte schon eine Temperatur von 1950°C aus, um mit einer Haltezeit von 2 Stunden die Poren optimal zu öffnen und so einen minimalen Gegendruck einzustellen.

**Ausführungsbeispiel 2b (AFB 2b):**

Die verwendeten Formkörper wurden wie in Ausführungsbeispiel 1 beschrieben hergestellt, wobei zur Herstellung der Formkörper eine Zusammensetzung gemäß Tabelle 2 verwendet wurde.

Wie in Ausführungsbeispiel 2a wiesen die hergestellten Formkörper wechselseitig verschlossene Ein- und Ausströmkanäle auf und hatten eine Zelldichte von 200cpsi (cells per square inch) und einer Kanalwandstärke von 400µm. Die Breite und Höhe der Formkörper betrug 49 mm, die Länge wurde wieder auf 178 mm eingestellt.

Dieses Design ist im Bereich von Off-Road-Anwendungen, bei denen sehr stabile und robuste Systeme notwendig sind, sehr weit verbreitet.

Die so hergestellten Formkörper wurden zwei Stunden bei einer Maximaltemperatur 1965°C behandelt und hatten folgende Eigenschaften:

Porosität: 58 Vol.-%, bezogen auf das äußere Volumen des Formkörpers wobei das Volumen offener Kanäle nicht mitgerechnet wurde,
Mittlerer Porendurchmesser: 23 μm
Spezifisches Gewicht: 560 g/l

**Vergleichsbeispiel 3**

In Anlehnung an das Dokument US 4,777,152 wurde auf der Basis eines beta-SiC-Pulvers ein Formkörper mit 200 cpsi Zelldichte und einer Wandstärke von 400 μm hergestellt.

Der Aluminumgehalt wurde auf 1 Gew.-%, bezogen auf den Anteil von SiC, eingestellt. Vorversuche mit Presslingen ergaben für diesen Anteil die besten Ergebnisse in Bezug auf die Stabilität des Formkörpers bei einer Sintertemperatur von 2000°C.

Das verwendete beta-SiC-Pulver wurde bei Superior Graphite Europe Ltd. (Sundsvall, SE) bezogen und hatte die Bezeichnung HSC-1200. Die mittlere Korngröße betrug 6,26 μm. Bei der Partikelgröße wurde die obere Grenze der in Dokument US 4,777,152 angegebenen Spannweite gewählt.

Die Rezeptur ist in Tabelle 3 aufgeführt.

Tabelle 3: Zusammensetzung der Extrusionsmasse

| Komponente | Anteil, Gewichts-% |
|---|---|
| SiC (HSC1200) | 74,8 % |
| Bindemittel | 5,1 % |
| Glycerin | 1,5 % |
| Aluminium | 0,7 % |
| Polyethylenglycol | 1,8 % |
| Wasser | 15,9 % |
| Plastifizierer | 0,2 % |

Der erhaltene Formkörper hatte die folgenden Eigenschaften:

Porosität: 40 Vol.-%, bezogen auf das äußere Volumen des Formkörpers wobei das Volumen offener Kanäle nicht mitgerechnet wurde,
Mittlerer Porendurchmesser: 8 μm
Spezifisches Gewicht: 770 g/l

Die Untersuchung im REM zeigte deutlich auf, dass über das erfindungsgemäße Verfahren ohne Zugabe eines Porosierungsmittels eine deutlich höhere Porosität in dem erfindungsgemäßen Formkörper erzielt wurde. Um gemäß des im Vergleichbeispiel verwendeten Verfahrens eine deutlich größere Porenweite einstellen zu können, müsste ein beta-SiC-Pulver mit einer deutlich größeren mittleren Korngröße gewählt werden. Die entsprechenden REM-Aufnahmen sind in den Figuren 18a bis 18f dargestellt.

Weiterhin weist der im Ausführungsbeispiel 2b hergestellte Formkörper im Unterschied zum im Vergleichsbeispiel hergestellten Formkörper eine andere Mikrostruktur auf. Während der im Ausführungsbeispiel 2b hergestellte Formkörper die typische Struktur mit großen Primärporen und kleineren Durchgangsporen analog einer schaumartigen Struktur aufweist, zeigt die Struktur des im Vergleichsbeispiel hergestellten-Formkörpers die typische Mikrostruktur einer Kornkeramik auf.

Die Vorteile der höheren Porosität und der dadurch deutlich verbesserten Aufnahmekapazität für hohe Wash-Coat-Beladungen wird durch den Vergleich der Druckabfälle deutlich. Diese sind in Figur 19 dargestellt: Mit der hohen Wash-Coat-Beladung von 100 g/L weist der Filter aus AFB 2b immer noch einen deutlich geringeren Gegendruck auf als der aus dem Vergleichsbeispiel. Dies ist nur möglich aufgrund der deutlich höheren Porosität und der größeren Porendurchmesser, welche sich in-situ durch das Herstellungsverfahren einstellen.

**Patentansprüche**

**1.** Filter, umfassend wenigstens einen porösen alpha-SiC-haltigen Formkörper mit gasdurchlässiger, offenporiger Porenstruktur umfassend plättchenförmige Kristallite, die zu einer zusammenhängenden, durchgehenden Skelettstruktur verbunden sind, wobei die Skelettstruktur zu mehr als 80 Gew.-%, bezogen auf das Gesamtgewicht an SiC, aus alpha-SiC besteht, wobei der Formkörper als Wabenfilterelement ausgebildet ist, bei dem die Ein- und Ausströmöffnungen der Druckströmkanäle wechselseitig verschlossen sind.

2. Filter nach Anspruch 1,
wobei der alpha-SiC-haltige Formkörper parallel zueinander angeordnete Durchströmkanäle mit einer Wandstärke aus einem Bereich von 100 $\mu$m bis 580 $\mu$m aufweist.

3. Filter nach einem der Ansprüche 1 oder 2,
wobei die gasdurchlässige, offenporige Porenstruktur des SiC-Formkörpers Poren aufweist, deren mittlerer Porendurchmesser größer ist als die Größe der Kristallite sowie die mittlere Dicke der Porenwände, die aus den Kristalliten aufgebaut sind.

4. Filter nach einem der Ansprüche 1 bis 3,
wobei die gasdurchlässige, offenporige Porenstruktur des SiC-Formkörpers Poren mit einem mittels Quecksilberporosimetrie ermittelten mittleren Porendurchmesser aus einem Bereich von 5 $\mu$m bis 50 $\mu$m und eine offene Porosität aus einem Bereich von 50 bis 85 %, bezogen auf das Gesamtvolumen des Formkörpers, aufweist.

5. Filter nach einem der Ansprüche 1 bis 4,
wobei der SiC-Formkörper weiterhin wenigstens ein ternäres Carbid aus Silizium, Kohlenstoff und wenigstens einem Element aus der 3. Hauptgruppe des Periodensystems der Elemente enthält.

6. Filter nach Anspruch 4,
wobei das wenigstens eine ternäre Carbid aus Silizium, Kohlenstoff und wenigstens einem Element aus der 3. Hauptgruppe des Periodensystems der Elemente Aluminium enthält.

7. Filter nach einem der Ansprüche 5 oder 6,
wobei das wenigstens eine ternäre Carbid ein Carbid der allgemeinen Summenformel $Al_4C_3(SiC)_x$, wobei x eine ganze Zahl von 1 bis 4 bedeutet, oder eine Mischung davon ist.

8. Filter nach einem der Ansprüche 5 bis 7,
wobei das wenigstens eine ternäre Carbid ein Carbid der Formel $Al_4SiC_4$ oder ein
Carbid der Formel $Al_4Si_2C_5$ oder eine Mischung davon ist.

9. Filter nach einem der Ansprüche 5 bis 8,
wobei der SiC-Formkörper das wenigstens eine ternäre Carbid in einem Anteil von 0,1 Gew.-% bis 10 Gew.-%, jeweils bezogen auf das Gesamtgewicht an SiC, umfasst.

10. Filter nach einem der Ansprüche 1 bis 9,
wobei das alpha-SiC wenigstens teilweise im 2H-, 4H-, 6H-, 8H-, 10H-, 14H-und/oder 15R-Polytyp vorliegt.

11. Filter nach einem der Ansprüche 1 bis 10,
wobei der poröse SiC- Formkörper weiterhin Stickstoff- und/oder Sauerstoffatome in einem Stoffmengenanteil von kleiner 5 Atom-%, bezogen auf die Summe aller Bestandteile des Formkörpers, umfasst.

12. Verfahren zum Herstellen eines einen porösen alpha-SiC-haltigen Formkörper umfassenden Filters nach einem der Ansprüche 1 bis 11, wobei das Verfahren folgende Schritte umfasst,

a) Bereitstellen eines porösen beta-SiC-haltigen Formkörpers, und
b) Erhitzen des beta-SiC-haltigen Formkörpers auf eine Temperatur von 1800°C bis 2050°C unter Erhalt des porösen alpha-SiC-haltigen Formkörpers.

13. Verfahren nach Anspruch 12,
wobei das beta-SiC des in Schritt a) bereitgestellten beta-SiC-haltigen Formkörpers in Schritt b) zu mindestens 80 Gew.-%, bezogen auf das Gesamtgewicht des in Schritt a) bereitgestellten beta-SiC, in alpha-SiC umgewandelt wird.

14. Verfahren nach einem der Ansprüche 12 oder 13,

wobei der mittels Quecksilberporosimetrie ermittelte mittlere Porendurchmesser des in Schritt a) bereitgestellten beta-SiC-haltigen Formkörpers in Schritt b) um den Faktor 2 bis 10 zunimmt.

**15.** Verfahren nach einem der Ansprüche 12 bis 14,
wobei der in Schritt a) bereitgestellte poröse beta-SiC-haltige Formkörper durch ein Verfahren erhalten wird, dass folgende Schritte umfasst,

a1) Formen eines Grünkörpers aus einer Mischung mit Kohlenstoff-haltigen Partikeln und Silizium-haltigen Partikeln und wenigstens einem Bindemittel,
a2) Trocknen des geformten Grünkörpers,
a3) Entbindern des trockenen Grünkörpers unter Sauerstoffausschluss, und
a4) Erhitzen des entbinderten Grünkörpers unter Sauerstoffausschluss auf eine Temperatur aus einem Bereich von 1300°C bis 1750°C für eine Zeitdauer von mindestens 1/2 Stunde, unter Erhalt des porösen beta-SiC-haltigen Formkörpers.

**16.** Verfahren nach einem der Ansprüche 12 bis 14,
wobei der in Schritt a) bereitgestellte poröse beta-SiC-haltige Formkörper durch ein Verfahren erhalten wird, dass folgende Schritte umfasst,

a1') Formen eines Grünkörpers aus einer Mischung mit oder aus Kohlenstoff-haltigen Partikeln, die vorzugsweise kein SiC umfassen, und wenigstens einem Bindemittel sowie, optional, wenigstens einem weiteren Hilfsstoff,
a2') Trocknen des geformten Grünkörpers,
a3') Entbindern des trockenen Grünkörpers unter Sauerstoffausschluss, und
a4') Infiltrieren des entbinderten Grünkörpers unter Sauerstofifausschluss bei einer Temperatur aus einem Bereich von 1300°C bis 1750°C mit einer Silizium-haltigen Schmelze, vorzugsweise Siliziumschmelze, unter Erhalt des porösen beta-SiC-haltigen Formkörpers.

**17.** Verfahren nach Anspruch 15,
wobei die in Schritt a1) zum Formen des Grünkörpers verwendete Mischung weiterhin mindestens ein Element aus der 3. Hauptgruppe des Periodensystems der Elemente, vorzugsweise Bor oder Aluminium oder Mischungen davon, weiter bevorzugt Aluminium, enthält.

**18.** Verfahren nach Anspruch 16,
wobei die in Schritt a4') verwendete Silizium-haltigen Schmelze, vorzugsweise Siliziumschmelze, weiterhin mindestens ein Element aus der 3. Hauptgruppe des Periodensystems der Elemente, vorzugsweise Bor oder Aluminium oder Mischungen davon, weiter bevorzugt Aluminium, enthält.

**19.** Verfahren nach einem der Ansprüche 12 bis 16,
wobei der in Schritt a) bereitgestellte beta-SiC-haltige Formkörper mindestens ein Element aus der 3. Hauptgruppe des Periodensystems der Elemente, vorzugsweise Bor oder Aluminium oder Mischungen davon, weiter bevorzugt Aluminium, enthält.

**20.** Filter nach einem der Ansprüche 1 bis 11, wobei der poröse alpha-SiC-haltige Formkörper mindestens eine katalytisch aktive Beschichtung enthält.

**Claims**

**1.** Filter comprising at least one porous moulded body containing alpha-SiC having a gas permeable, open-pored structure comprising platelet-shaped crystallites which are connected to form a cohesive, continuous skeletal structure, which skeletal structure consists of more than 80 % by weight of alpha-SiC relative to the total weight of SiC, and the moulded body is provided in the form of a honeycomb filter element in which the inflow and outflow orifices of the flow passages are alternately closed.

**2.** Filter as claimed in claim 1,
wherein the alpha-SiC-containing moulded body has mutually parallel flow passages with a wall thickness within a range of between 100 $\mu$m and 580 $\mu$m.

3. Filter as claimed in one of claims 1 or 2,
wherein the gas permeable, open-pored pore structure of the SiC moulded body has pores, the mean pore diameter of which is greater than the size of the crystallites and the mean thickness of the pore walls constructed from the crystallites.

4. Filter as claimed in one of claims 1 to 3,
wherein the gas permeable, open-pored pore structure of the SiC moulded body has pores with a mean pore diameter, determined by mercury porosimetry, within a range of from 5 $\mu$m to 50 $\mu$m and an open porosity within a range of from 50 to 85 % relative to the total volume of the moulded body.

5. Filter as claimed in one of claims 1 to 4,
wherein the SiC moulded body additionally contains at least one ternary carbide of silicon, carbon and at least one element from the 3rd main group of the periodic table of elements.

6. Filter as claimed in claim 4,
wherein the at least one ternary carbide of silicon, carbon and at least one element from the 3rd main group of the periodic table of elements contains aluminium.

7. Filter as claimed in one of claims 5 or 6,
wherein the at least one ternary carbide is a carbide having the general empirical formula $Al_4C_3(SiC)_x$, where x is a whole number from 1 to 4 or a mixture thereof.

8. Filter as claimed in one of claims 5 to 7,
wherein the at least one ternary carbide is a carbide having the formula $Al_4SiC_4$ or a carbide having the formula $Al_4Si_2C_5$ or a mixture thereof.

9. Filter as claimed in one of claims 5 to 8,
wherein the SiC moulded body comprises the at least one ternary carbide in a proportion of 0.1 % by weight to 10 % by weight relative to the total weight of SiC in each case.

10. Filter as claimed in one of claims 1 to 9,
wherein the alpha-SiC is at least partially present in 2H, 4H, 6H, 8H, 10H, 14H and/or 15R polytype.

11. Filter as claimed in one of claims 1 to 10,
wherein the porous SiC moulded body further comprises nitrogen and/or oxygen atoms in anamount-of-substance fraction of less than 5 atom % relative to the sum of all constituents of the moulded body.

12. Method of producing a filter comprising a porous moulded bodycontaining alpha-SiC as claimed in one of claims 1 to 11, which method comprises the following steps:

a) providing a porous beta-SiC-containing moulded body and
b) heating the beta-SiC-containing moulded body to a temperature of 1800°C to 2050°C to obtain the porous alpha-SiC-containing moulded body.

13. Method as claimed in claim 12,
whereby the beta-SiC of the beta-SiC-containing moulded body provided in step a) is at least 80 % by weight converted into alpha-SiC in step b) relative to the total weight of the beta-SiC provided in step a).

14. Method as claimed in one of claims 12 or 13,
whereby the mean pore diameter of the beta-SiC-containing moulded body provided in step a), determined by mercury porosimetry, increases in step b) by a factor of 2 to 10.

15. Method as claimed in one of claims 12 to 14,
whereby the porous beta-SiC-containing moulded body provided in step a) is obtained by a method comprising the following steps:

a1) moulding a green body from a mixture comprising carbon-containing particles and silicon-containing particles and at least one binding agent,

a2) drying the moulded green body,

a3) debinding the dried green body in an oxygen-free atmosphere and

a4) heating the green body after debinding in an oxygen-free atmosphere to a temperature within a range of from 1300°C to 1750°C for a period of at least 1/2 hour toobtain the porous beta-SiC-containing moulded body.

16. Method as claimed in one of claims 12 to 14,
whereby the porous beta-SiC-containing moulded body provided in step a) is obtained by a method comprising the following steps:

a1') moulding a green body from a mixture with or of carbon-containing particles, which preferably do not comprise any SiC, and at least one binding agent and, optionally, at least one other additive,

a2') drying the moulded green body,

a3') debinding the dried green body in an oxygen-free atmosphere and

a4') infiltrating the green body after debindingin an oxygen-free atmosphere at a temperature within a range of from 1300°C to 1750°C with a silicon-containing melt to obtain the porous beta-SiC-containing moulded body.

17. Method as claimed in claim 15,
whereby the mixture used in step a1) to mould the green body also contains an element from the 3rd main group of the periodic table of elements, preferably boron or aluminium or mixtures thereof, more preferably aluminium.

18. Method as claimed in claim 16,
whereby the silicon-containing melt used in step a4') preferably also contains at least one element from the 3rd main group of the periodic table of elements, preferably boron or aluminium or mixtures thereof, more preferably aluminium.

19. Method as claimed in one of claims 12 to 16,
whereby the beta-SiC-containing moulded body provided in step a) contains at least one element from the 3rd main group of the periodic table of elements, preferably boron or aluminium or mixtures thereof, more preferably aluminium.

20. Filter as claimed in one of claims 1 to 11,
wherein the porous alpha-SiC-containing moulded body contains at least one catalytically active coating.

## Revendications

1. Filtre, comprenant au moins un objet moulé poreux, contenant de l'alpha-SiC, ayant une structure de pores perméable aux gaz et à pores ouverts, comprenant des cristallites lamellaires, qui sont reliés pour donner une structure de squelette continue d'un seul tenant, la structure de squelette étant, pour plus de 80 % en poids par rapport au poids total du SiC, constituée d'alpha-SiC, l'objet moulé étant conçu comme un élément de filtre en nid d'abeille, dans lequel les orifices d'entrée et de sortie des canaux de passage sont obturés en alternance.

2. Filtre selon la revendication 1, dans lequel l'objet moulé contenant de l'alpha-SiC présente des canaux de passage, disposés parallèlement les uns aux autres, ayant une épaisseur de paroi comprise dans la plage de 100 $\mu$m à 580 $\mu$m.

3. Filtre selon l'une des revendications 1 ou 2, dans lequel la structure de pores perméables aux gaz et à pores ouverts de l'objet moulé en SiC comprend des pores dont le diamètre moyen de pore est supérieur à la grosseur des cristallites, ainsi qu'à l'épaisseur moyenne des parois des pores qui sont constituées des cristallites.

4. Filtre selon l'une des revendications 1 à 3, dans lequel la structure de pores perméables aux gaz et à pores ouverts de l'objet moulé en SiC comprend des pores ayant un diamètre moyen de pore, déterminé par porosimétrie au mercure, compris dans la plage de 5 $\mu$m à 50 $\mu$m et une porosité ouverte comprise dans la plage de 50 à 85 %, par rapport au volume total de l'objet moulé.

5. Filtre selon l'une des revendications 1 à 4, dans lequel l'objet moulé en SiC contient en outre au moins un carbure ternaire constitué de silicium, de carbone et d'au moins un élément du troisième groupe principal du Système Périodique des Eléments.

6. Filtre selon la revendication 4, dans lequel le ou les carbures ternaires de silicium, de carbone et d'au moins un élément du troisième groupe principal du Système Périodique des Eléments contiennent de l'aluminium.

7. Filtre selon l'une des revendications 5 ou 6, dans lequel le ou les carbures ternaires sont des carbures de formule développée générale $Al_4C_3(SiC)_x$, où x est un nombre entier de 1 à 4, ou des mélanges de ceux-ci.

8. Filtre selon l'une des revendications 5 à 7, dans lequel le ou les carbures ternaires sont des carbures $Al_4SiC_4$ ou des carbures de formule $Al_4Si_2C_5$ ou des mélanges de ceux-ci.

9. Filtre selon l'une des revendications 5 à 8, dans lequel l'objet moulé en SiC comprend le ou les carbures ternaires selon une proportion de 0,1 % en poids à 10 % en poids, dans chaque cas par rapport au poids total du SiC.

10. Filtre selon l'une des revendications 1 à 9, dans lequel l'alpha-SiC se présente au moins partiellement sous la forme du polytype 2H, 4H, 6H, 8H, 10H, 14H et/ou 15R.

11. Filtre selon l'une des revendications 1 à 10, dans lequel l'objet moulé en SiC poreux comprend en outre des atomes d'azote et/ou d'oxygène selon une proportion, exprimée en quantité de matière, inférieure à 5 % en atomes par rapport à la somme de tous les constituants de l'objet moulé.

12. Procédé de fabrication d'un filtre comprenant un objet moulé poreux contenant de l'alpha-SiC selon l'une des revendications 1 à 11, le procédé comprenant les étapes suivantes :

a) fourniture d'un objet moulé poreux contenant du bêta-SiC, et
b) chauffage de l'objet moulé contenant du bêta-SiC à une température de 1800°C à 2050°C, avec obtention de l'objet moulé poreux contenant de l'alpha-SiC.

13. Procédé selon la revendication 12, dans lequel le bêta-SiC de l'objet moulé contenant du bêta-SiC et fourni dans l'étape a) est, dans l'étape b), converti à raison d'au moins 80 % en poids, par rapport au poids total du bêta-SiC fourni dans l'étape a), en alpha-SiC.

14. Procédé selon l'une des revendications 12 ou 13, **caractérisé en ce que** le diamètre moyen des pores, déterminé par porosimétrie au mercure, de l'objet moulé contenant du bêta-SiC et fourni dans l'étape a), est dans l'étape b) multiplié par un facteur de 2 à 10.

15. Procédé selon l'une des revendications 12 à 14, dans lequel l'objet moulé poreux contenant du bêta-SiC, fourni dans l'étape a), est obtenu par un procédé qui comprend les étapes suivantes :

a1) formage d'une ébauche crue constituée d'un mélange de particules contenant du carbone et de particules contenant du silicium, et au moins un liant,
a2) séchage de l'ébauche crue formée,
a3) déliantage de l'ébauche crue sèche, à l'abri de l'oxygène, et
a4) chauffage de l'ébauche crue déliantée à l'abri de l'oxygène à une température comprise dans la plage de 1300°C à 1750°C pendant un laps de temps d'au moins 1/2 heure, avec obtention de l'objet moulé poreux contenant du bêta-SiC.

16. Procédé selon l'une des revendications 12 à 14, dans lequel l'objet moulé poreux contenant du bêta-SiC, fourni dans l'étape a), est obtenu par un procédé qui comprend les étapes suivantes :

a1') formage d'une ébauche crue constituée d'un mélange contenant, ou en étant constitué, des particules contenant du carbone, qui de préférence ne comprennent pas de SiC, et au moins un liant, et aussi, en option, au moins un adjuvant supplémentaire,
a2') séchage de l'ébauche crue formée,
a3') déliantage de l'ébauche crue sèche, à l'abri de l'oxygène, et
a4') infiltration, dans l'ébauche crue déliantée, à l'abri de l'oxygène, à une température comprise dans la plage de 1300°C à 1750°C, d'une masse fondue contenant du silicium, de préférence une masse fondue de silicium, avec obtention de l'objet moulé poreux contenant du bêta-SiC.

17. Procédé selon la revendication 15, dans lequel le mélange utilisé dans l'étape a1) pour le formage de l'ébauche crue contient en outre au moins un élément du troisième groupe principal du Système Périodique des Eléments,

EP 2 597 075 B1

de préférence du bore ou de l'aluminium ou des mélanges de ceux-ci, et d'une manière plus préférée de l'aluminium.

**18.** Procédé selon la revendication 16, dans lequel la masse fondue contenant du silicium, de préférence la masse fondue de silicium, utilisée dans l'étape a4'), contient en outre au moins un élément du troisième groupe principal du Système Périodique des Eléments, de préférence du bore ou de l'aluminium ou des mélanges de ceux-ci, d'une manière plus préférée de l'aluminium.

**19.** Procédé selon l'une des revendications 12 à 16, dans lequel l'objet moulé contenant du bêta-SiC, fourni dans l'étape a), contient au moins un élément du troisième groupe principal du Système Périodique des Eléments, de préférence du bore ou de l'aluminium ou des mélanges de ceux-ci, d'une manière plus préférée de l'aluminium.

**20.** Filtre selon l'une des revendications 1 à 11, dans lequel l'objet moulé poreux contenant de l'alpha-SiC contient au moins un revêtement catalytiquement actif.

**Figur 1:**

XP090407_0012          2009-07-29                    x1.0k     100 um

Cross section, channel wall

**Figur 2:**

| I | II | III | IV |
|---|----|-----|----|
| Silizierung, d.h. Umsetzung von Si und C zu SiC<br><br>Entstehung des Porensystem mit vielen dünnen Hautstrukturen.<br><br>Der beta-SiC Formkörper entsteht<br><br>Sehr kleine Durchgangsöffnungen | Vervollständigung der Umsetzung<br><br>Kristalle wachsen, Hautstrukturen nehmen nur wenig ab<br><br>Weiterhin kleine Durchgangsöffnungen | Fortschreiten des Kristallwachstums bei gleichzeitiger Umwandlung von beta-SiC in alpha-SiC → der alpha-SiC Formkörper entsteht<br><br>Hautstrukturen lösen sich auf, Weitung der Durchgangsöffnungen, Steuerung Porengröße | Keine Hautstruktur mehr vorhanden, starkes Kristallwachstum mit klassischer Rekristallisation Struktur wird instabil<br><br>Durchgangsöffnungen verschwinden<br><br>Entstehung von sehr großen Poren |

1300°C – 1750°C          1750°C – 1850°C          1850°C – 2000°C          > 2000°C

Durchgangsöffnung

Primärpore

Porenwand

**Figur 3a:**

**Figur 3b:**

Maximaltemperatur: 1450°C, 4 Stunden Haltezeit

**Figur 4a:**

**Figur 4b:**

Maximaltemperatur: 1850°C, 20 Minuten Haltezeit

**Figur 5a:**

**Figur 5b:**

Maximaltemperatur: 1950°C, 20 Minuten Haltezeit

Figur 6a:

Maximaltemperatur: 2000°C, 20 Minuten Haltezeit

Figur 6b:

Figur 7a:

Maximaltemperatur: 1450°C, 4 Stunden Haltezeit

Figur 7b:

Figur 8a:

Maximaltemperatur: 1950°C, 20 Minuten Haltezeit

Figur 8b:

**Figur 9:**

**Figur 10:**

**Figur 11:**

**Figur 12:**

**Figur 13:**

**Figur 14:**

**Figur 15:**

**Figur 16:**

**Figur 17:**

## Figur 18:

**Ausführungsbeispiel 2B**
**Figur 18a:**

**Vergleichsbeispiel**
**Figur 18d:**

Blick auf Kanalwand

**Figur 18b:**

**Figur 18e:**

Blick auf Kanalquerschnitt (Bruchbild)

**Figur 18c:**

**Figur 18f:**

Vergrößertes Bild auf Kanalquerschnitt(Bruchbild)

**Figur 19:**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0336883 B1
- EP 1277714 A1
- DE 19727115 C2
- EP 1070687 A1
- EP 0796830 A1
- EP 1741687 A1
- US 7648932 B2
- US 7867313 B2
- EP 1588995 A1

- EP 2158956 A1
- US 3097930 A
- US 3833386 A
- US 3175918 A
- US 3345440 A
- US 4777152 A
- US 4756895 A
- EP 1741685 A1